# EUROPEAN PATENT APPLICATION

(11) **EP 4 545 817 A1**
(43) Date of publication of application: **30.04.2025**
(21) Application number: 23826760.3
(22) Date of filing: 31.03.2023
(51) Int. Cl.: F16D 48/06, F16D 23/12

(54) **TWO-SPEED TRANSMISSION**

(30) Priority: 21.06.2022 JP 2022099905
(71) Applicant: NSK Ltd., Tokyo 141-8560 (JP)
(72) Inventor: YAMAMOTO, Akihiro, Fujisawa-shi, Kanagawa 251-8501 (JP); KIMURA, Shingo, Fujisawa-shi, Kanagawa 251-8501 (JP)
(74) Representative: Müller-Boré & Partner Patentanwälte PartG mbB
(86) International application number: PCT/JP2023/013464
(87) International publication number: WO 2023/248571

(57) **Abstract**

[Problem] To prevent the occurrence of transmission shock in a two-speed transmission capable of switching the reduction ratio between two stages, high and low.

[Solution] A two-speed transmission 1 includes: a function of detecting a piston touch point θₚ and/or a function of detecting a clutch touch point θ_{f}, and a function of, when switching between a high reduction ratio mode and a low reduction ratio mode, adjusting a rotation amount of a drive cam 34 rotationally driven by a shift motor 66 through a reduction gear 67, on the basis of the piston touch point θₚ and/or the clutch touch point θ_{f}.

## Description

### TECHNICAL FIELD

The present disclosure relates to a two-speed transmission for switching the reduction ratio between an input member and an output member in two stages, high and low.

### BACKGROUND ART

In response to a trend of reducing fossil fuel consumption in recent years, research into electric vehicles and hybrid vehicles has progressed, and they are in part implemented. Electric motors, which are the power source for electric vehicles and hybrid vehicles, differ from internal combustion engines (engines) that run by directly burning fossil fuels, and the torque and rotational speed characteristics of their output shafts are favorable for use in automobiles, or in other words, since the maximum torque is generally generated at startup, it is not necessarily essential to provide a transmission necessary for a typical automobile that uses an internal combustion engine as a drive source.

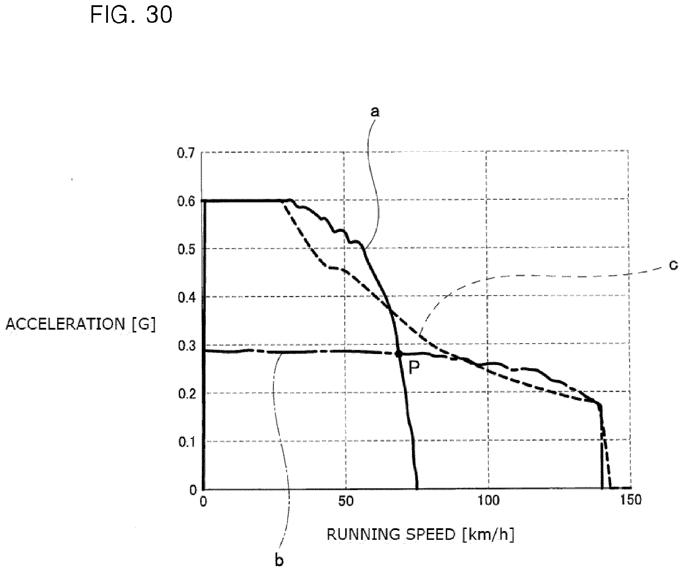

However, even in a case where an electric motor is used as the drive source, acceleration performance and high-speed performance can be improved by providing a transmission. More specifically, by installing a transmission, the relationship between the running speed and acceleration of a vehicle can be made smoother, similar to that of an automobile equipped with a gasoline engine and equipped with a transmission in the power transmission system. This point will be explained with reference to FIG. 30.

For example, when a power transmission device with a large reduction ratio is arranged between an output shaft of an electric motor and an input portion of a differential gear connected to drive wheels, the relationship between the acceleration (G) and the running speed (km/h) of the electric vehicle will be as illustrated by the solid line a in FIG. 30. In other words, although the acceleration performance at low speed is excellent, high speed driving becomes impossible. On the other hand, when a power transmission device with a small reduction ratio is arranged between the output shaft and the input portion, this relationship becomes as illustrated by the chain line b in FIG. 30. In other words, high-speed driving is possible, but acceleration performance at low speeds is impaired.

On the other hand, when a transmission is provided between the output shaft and the input portion, and the reduction ratio of the transmission is changed according to the vehicle speed, a characteristic can be obtained in which a portion of the solid line a to the left of the point P and a portion of the chain line b to the right of the point P are continuous. This characteristic is mostly the same as that of a gasoline engine vehicle with a similar output as illustrated by the dashed line c in Fig. 30, and it can be seen that in terms of acceleration performance and high-speed performance, performance equivalent to that of a gasoline engine vehicle with a transmission installed in the power transmission system can be obtained.

In JP H05-116549 A, construction of a drive device for an electric vehicle is disclosed in which the torque of the output shaft of an electric motor is increased by a two-speed transmission consisting of a pair of planetary gear mechanisms and a pair of brakes and transmitted to a differential gear. In this drive device for an electric vehicle, by switching the components of a pair of planetary gear mechanisms between a rotatable state and a non-rotatable state based on switching between a connected state and a disconnected state of a pair of brakes, the reduction ratio between the output shaft of the electric motor and the differential gear can be switched between two stages: high and low.

### CITATION LIST

### PATENT LITERATURE

Patent Literature 1: JP H05-116549 A

### SUMMARY OF INVENTION

### TECHNICAL PROBLEM

In automobiles, including electric vehicles, it is important from the aspect of ensuring ride comfort to prevent the occurrence of shock (transmission shock) when switching the reduction ratio. In the electric vehicle drive device described in JP H05-116549 A, in a case where timing of switching between a connected state and a disconnected state of a pair of brakes, and the output torque and rotational speed of a motor that is a drive source are appropriately controlled, it is possible to switch the reduction ratio while keeping a rotational torque of the output shaft constant, preventing the occurrence of transmission shock.

However, in the electric vehicle drive device described in JP H05-116549 A, when frictional engaging elements of a pair of brakes wear out due to long-term use, there is a possibility that the amount of pressing of the frictional engagement elements required to connect each brake may change and deviate from the initial value. As a result, when switching the reduction ratio, the timing at which the pair of brakes are switched between the connected state and the disconnected state cannot be precisely controlled, which may cause transmission shock to occur.

In view of the above-described situation, an object according to the present disclosure is to achieve a structure that is capable of preventing the occurrence of transmission shock in a two-speed transmission in which the reduction ratio can be switched between two stages: high and low.

### SOLUTION TO PROBLEM

The two-speed transmission according to an aspect of the present disclosure includes an input member, an output member, and an electric friction engaging device.

The electric friction engaging device includes a first clutch member, a second clutch member, a frictional engagement portion, an elastic biasing member, a cam device, and an electric actuator.

The second clutch member is supported coaxially with the first clutch member and rotatably relative to the first clutch member.

The frictional engagement portion has at least one first friction plate and at least one second friction plate supported displaceabley relative to each other in an axial direction, and is provided between the first clutch member and the second clutch member. The frictional engagement portion is configured to switch to a connected state in which torque is transmitted between the first clutch member and the second clutch member by pressing the first friction plate and the second friction plate against each other, and to switch to a disconnected state in which no torque is transmitted between the first clutch member and the second clutch member by releasing a force pressing the first friction plate and the second friction plate against each other.

The elastic biasing member is provided between the first clutch member or the second clutch member and the friction engagement portion, and elastically biases the first friction plate and the second friction plate in directions to press against each other.

The cam device has a drive cam and a driven cam supported rotatably and displaceabley in the axial direction relative to the drive cam. The cam device, due to the driven cam being relatively displaced in a direction in which a distance in the axial direction from the drive cam increases as the drive cam rotates, is configured to press the elastic biasing member in a direction that releases the force pressing the first friction plate and the second friction plate against each other.

The electric actuator has a shift motor and a reduction gear, the shift motor rotationally driving the drive cam through the reduction gear.

The two-speed transmission according to an aspect of the present disclosure, is configured, based on switching between the connected state and the disconnected state of the frictional engagement portion, to switch between a high reduction ratio mode in which a reduction ratio between the input member and the output member is large, and a low reduction ratio mode in which the reduction ratio between the input member and the output member is small.

The two-speed transmission according to an aspect of the present disclosure includes a function of, when the drive cam is rotationally driven by the shift motor through the reduction gear in order to switch the frictional engagement portion from the connected state to the disconnected state, detecting a phase in a rotational direction of the drive cam when an output torque or current value of the shift motor starts increasing at an increase rate equal to or higher than a first threshold value, as a piston touch point at which the elastic biasing member begins to be pressed in a direction that releases the force pressing the first friction plate and the second friction plate against each other.

Additionally or alternatively, the two-speed transmission includes a function of, when the drive cam is rotationally driven by the shift motor through the reduction gear in order to switch the frictional engagement portion from the connected state to the disconnected state, detecting the phase in a rotational direction of the drive cam, after exceeding the piston touch point, when the increase rate becomes equal to or less than a second threshold value, as a clutch touch point at which the force pressing the first friction plate and the second friction plate against each other becomes zero.

Furthermore, the two-speed transmission includes a function of, when switching between the high reduction ratio mode and the low reduction ratio mode, adjusting an amount of rotation of the drive cam rotationally driven by the shift motor through the reduction gear based on the piston touch point detected by the first function and/or the clutch touch point detected by the second function.

In the two-speed transmission according to an aspect of the present disclosure, the electric friction engaging device includes a return spring elastically biassing the first friction plate and the second friction plate in directions separating each other.

The two-speed transmission according to an aspect of the present disclosure may include a drive source configured to rotationally drive the input member; and may include a function of, by controlling output torque and rotational speed of the drive source, and rotational speed of the shift motor, switching from the high reduction ratio mode to the low reduction ratio mode while preventing rotational torque of the output member from changing discontinuously.

More specifically, the two-speed transmission may include a function of switching from the high reduction ratio mode to the low reduction ratio mode while maintaining the rotational torque of the output member within a predetermined range, that is, while maintaining the rotational torque of the output member substantially constant.

The two-speed transmission according to an aspect of the present disclosure may include a rotation transmission state switching device including a first member and a second member arranged coaxially with each other, and a mode selecting member that rotates or is displaced in the axial direction as the drive cam rotates, and may have a free mode in which rotation of the first member with respect to the second member is allowed regardless of a relative rotational direction between the first member and the second member, and a lock mode in which rotation of the first member with respect to the second member is prevented regardless of the relative rotational direction between the first member and the second member.

The rotation transmission state switching device switches between the free mode and the lock mode based on rotation or displacement in the axial direction of the mode selecting member.

In the two-speed transmission according to an aspect of the present disclosure, the rotation transmission state switching device may include a one-way clutch mode in which rotation of the first member relative to the second member is allowed only in a predetermined direction, and rotation of the first member relative to the second member in a direction opposite to the predetermined direction is prevented.

The two-speed transmission according to an aspect of the present disclosure may include a function of setting the rotation transmission state switching device to the one-way clutch mode while the frictional engagement portion is being switched from the disconnected state to the connected state, and/or while the frictional engagement portion is being switched from the connected state to the disconnected state.

In other words, the two-speed transmission according to an aspect of the present disclosure includes a function of, when switching the frictional engagement portion from the disconnected state to the connected state, switching the rotation transmission state switching device from the free mode or the lock mode to the one-way clutch mode at the same time as or before starting to increase a force that presses the first friction plate and the second friction plate against each other.

Additionally or alternatively, the two-speed transmission may include a function of, when switching the frictional engagement portion from the connected state to the disconnected state, switching the rotation transmission state switching device from the free mode or the lock mode to the one-way clutch mode at the same time as or before starting to decrease a force that presses the first friction plate and the second friction plate against each other.

The two-speed transmission according to an aspect of the present disclosure may include a planetary gear mechanism including a sun gear connected to the input member so as to rotate integrally with the input member, a ring gear arranged around the sun gear and coaxially with the sun gear, a carrier connected to the output member so as to rotate integrally with the output member, and a plurality of planetary gears respectively engaging with the sun gear and the ring gear and supported by the carrier so as to rotate about each central axis thereof.

In this case, one of the first friction plate and the second friction plate is supported so as to displace in the axial direction and so as not to rotate relative to the sun gear or the input member; and the other of the first friction plate and the second friction plate is supported so as to displace in the axial direction and so as not to rotate relative to the carrier or the output member.

Furthermore, one of the first member and the second member is supported so as not to rotate relative to a portion that does not rotate during use; and the other of the first member and the second member is supported so as not to rotate relative to the ring gear.

### ADVANTAGEOUS EFFECTS OF INVENTION

With the two-speed transmission according to an aspect of the present disclosure, it is possible to prevent the occurrence of transmission shock.

### BRIEF DESCRIPTION OF DRAWINGS

FIG. 1 is a cross-sectional view schematically illustrating a drive system incorporating a two-speed transmission as an example of an embodiment according to the present disclosure.
FIG. 2A is a diagram illustrating a torque transmission path in a low reduction ratio mode of the two-speed transmission of the example, and FIG. 2B is a diagram illustrating a torque transmission path in a high reduction ratio mode of the two-speed transmission of the example.
FIG. 3 is a perspective view of the two-speed transmission of the example.
FIG. 4 is a cross-sectional view of the two-speed transmission of the example.
FIG. 5 is a perspective view illustrating a planetary gear mechanism removed from the two-speed transmission of the example.
FIG. 6 is a cross-sectional view illustrating the planetary gear mechanism removed from the two-speed transmission of the example.
FIG. 7 is an exploded perspective view of the two-speed transmission of the example.
FIG. 8 is an exploded perspective view illustrating a worm and two support bearings taken out from an electric friction engaging device of the two-speed transmission of the example.
FIG. 9 is an exploded perspective view illustrating a first friction plate and a second friction plate taken out from the electric friction engaging device.
FIG. 10 is an enlarged view of area X in FIG. 4.
FIG. 11 is a perspective view illustrating a drive cam taken out from the electric friction engaging device.
FIG. 12 is an exploded perspective view illustrating a driven cam and rolling elements taken out from the electric friction engaging device.
FIG. 13A is a perspective view illustrating a flange portion of a rotating member and a pressing member taken out from the two-speed transmission of the example, and FIG. 13B is a perspective view illustrating the flange portion of the rotating member and the pressing member that has been taken out.
FIGS. 14A to 14D are schematic diagrams of a cam device of the electric friction engaging device as viewed from the outside in the radial direction.
FIG. 15 is a perspective view of a rotation transmission state switching device of the two-speed transmission of the example as viewed from an other side in the axial direction.
FIG. 16 is an exploded perspective view of the rotation transmission state switching device.
FIG. 17 is an end view of the rotation transmission state switching device as viewed from the other side in the axial direction with a selection plate removed.
FIG. 18 is an enlarged view of area Y in FIG. 17.
FIG. 19A is a schematic diagram illustrating an engagement relationship between a first engagement pawl, a second engagement pawl, an engagement recess portion, and a protruding portion in a free mode of the rotation transmission state switching device, FIG. 19B is a schematic diagram illustrating the engagement relationship in a lock mode, and FIG. 19C is a schematic diagram illustrating the engagement relationship in a one-way clutch mode.
FIG. 20 is a diagram schematically illustrating the modes of the electric friction engaging device and the modes of the rotation transmission state switching device in the two-speed transmission of the example.
FIGS. 21A and 21B are diagrams illustrating the relationship between a rotation angle of the drive cam and an output torque and current value of a shift motor when switching the electric friction engaging device from a connected mode to a disconnected mode, where FIG. 21A is a diagram illustrating a case where the first friction plate and the second friction plate are new and not worn, and FIG. 21B is a diagram illustrating a case where the wear of the first friction plate and the second friction plate has significantly progressed.
FIG. 22 is a cross-sectional view illustrating a state in which the electric friction engaging device is switched to the connected mode.
FIG. 23 is a cross-sectional view illustrating a state in which the pressing member and a piston are in contact with each other during switching from the connected mode to the disconnected mode of the electric friction engaging device.
FIG. 24 is a cross-sectional view illustrating a state in which the electric friction engaging device is switched to the disconnected mode.
FIG. 25 is a flowchart illustrating the operation when switching the two-speed transmission of the example from a high reduction ratio mode to a low reduction ratio mode.
FIGS. 26A to 26F are diagrams illustrating changes over time of each parameter when the two-speed transmission of the example is switched from the high reduction ratio mode to the low reduction ratio mode.
FIG. 27 is a cross-sectional view illustrating a part of a two-speed transmission of a comparative example.
FIG. 28 is a diagram schematically illustrating a connected state and a disconnected state of a first frictional engagement device and a second frictional engagement device in a two-speed transmission of a comparative example.
FIG. 29 is a diagram corresponding to FIG. 20, and illustrates a two-speed transmission according to a modification of the example.
FIG. 30 is a diagram for explaining an effect of incorporating a transmission into a drive device using an electric motor as a drive source.

### DESCRIPTION OF EMBODIMENTS

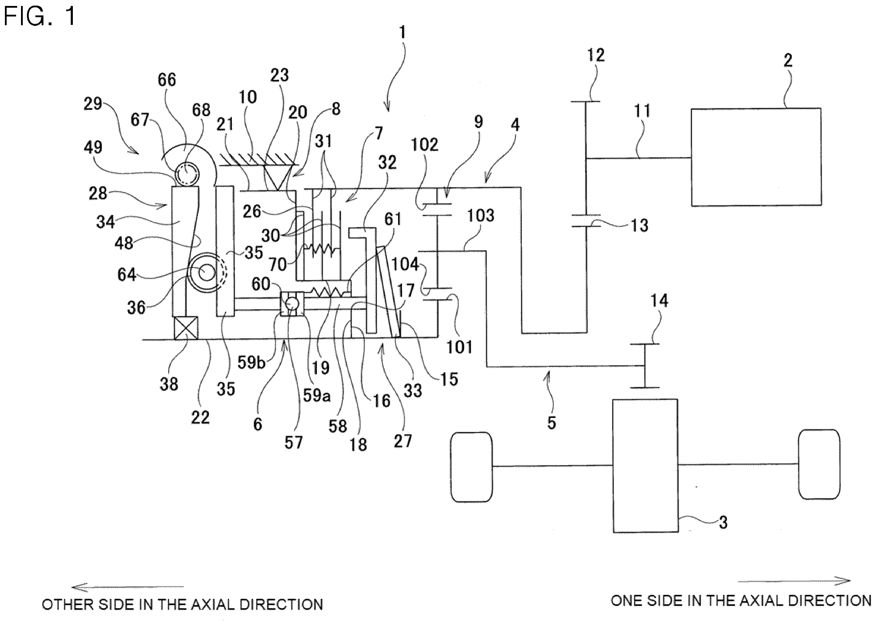

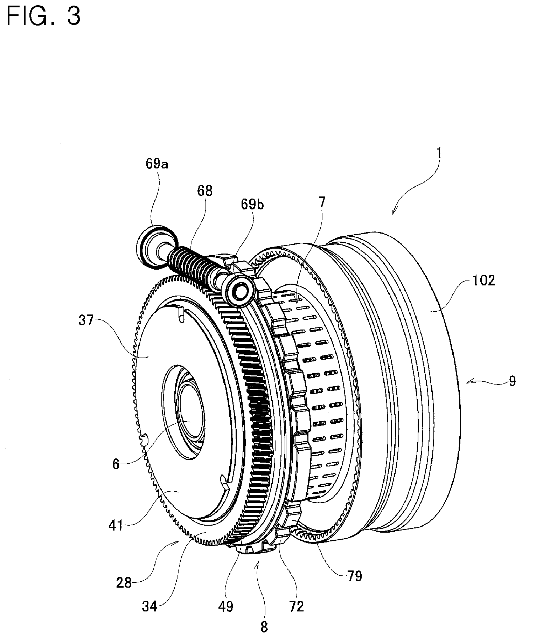

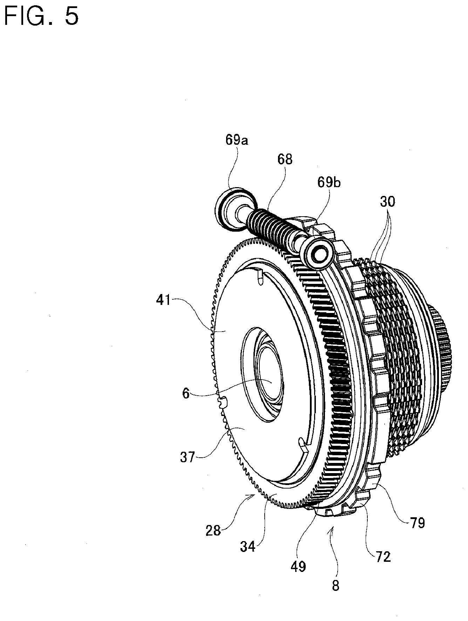

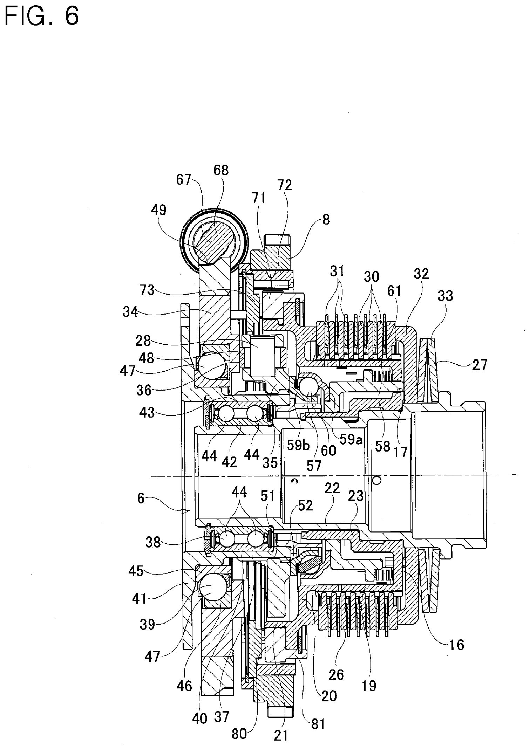

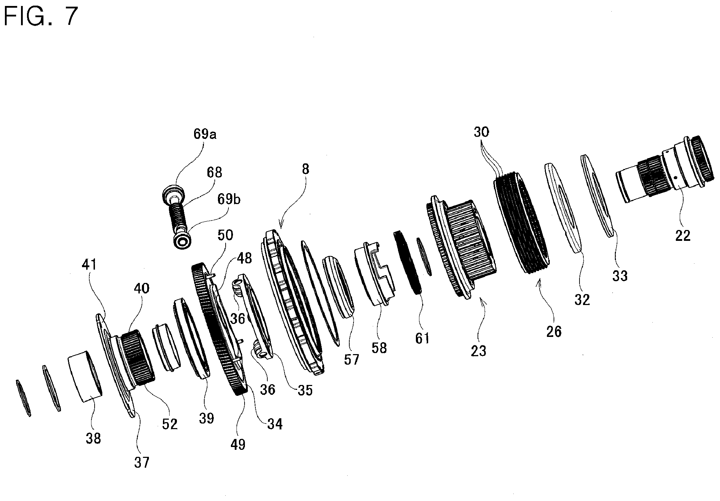

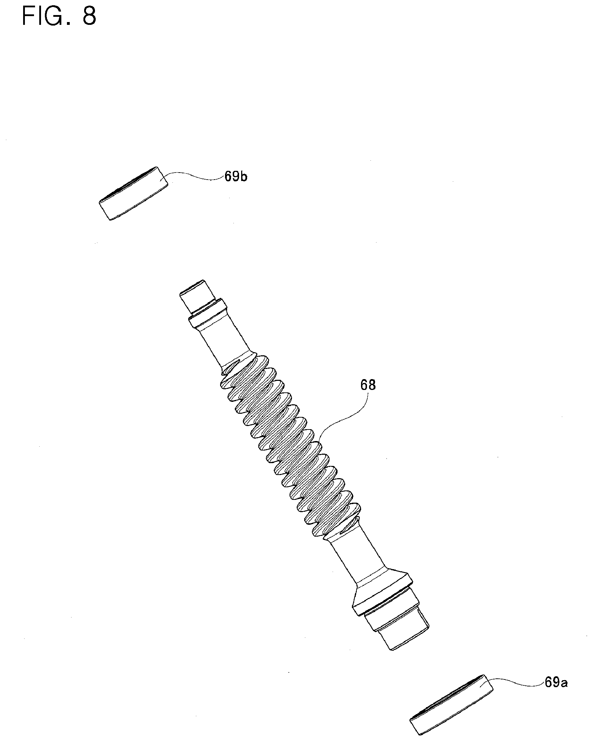

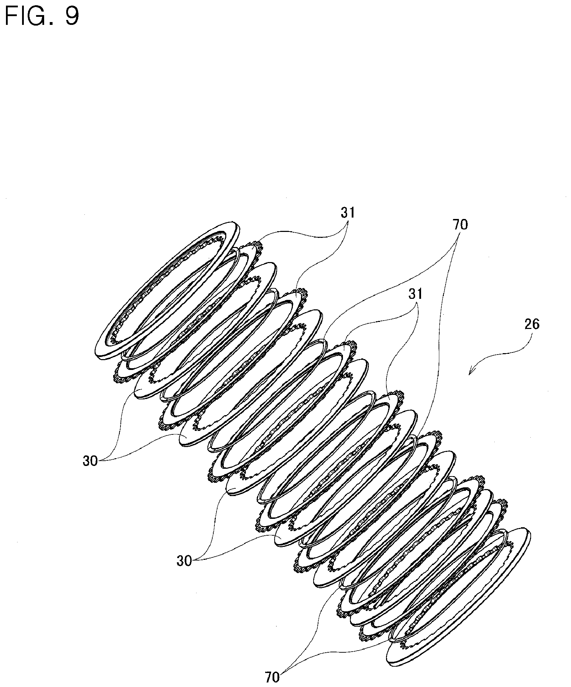

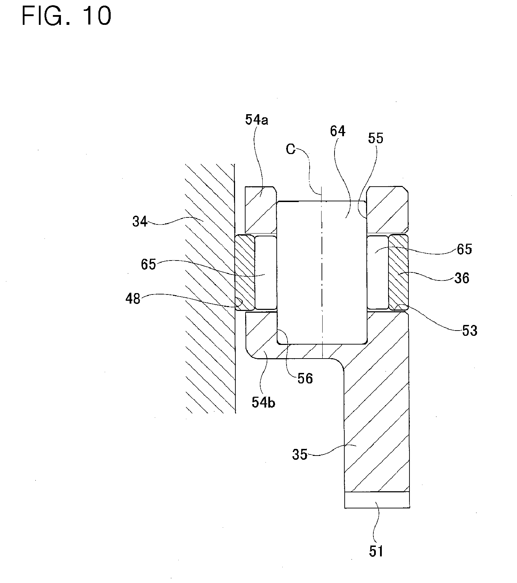

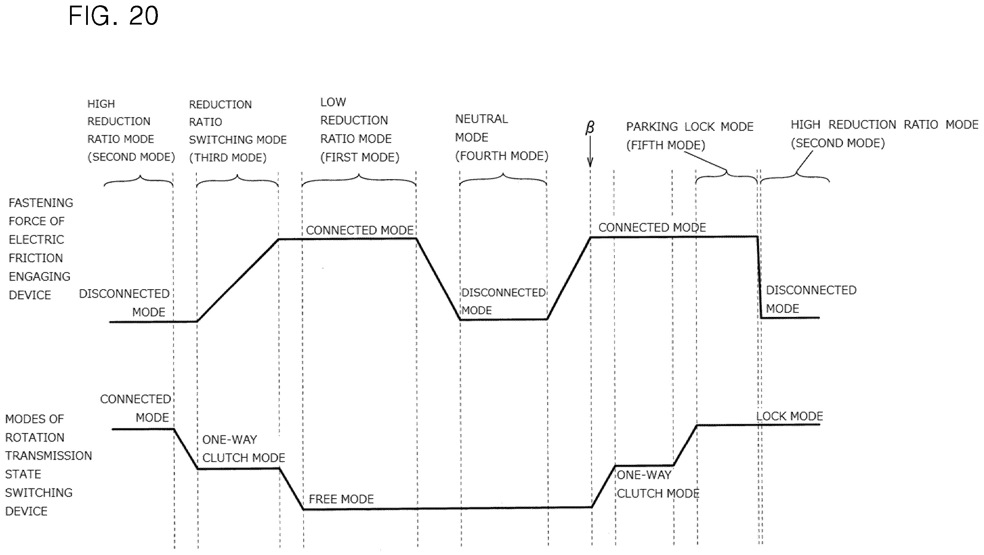

An example of an embodiment according to the present disclosure will be described using FIGS. 1 to 26. A two-speed transmission 1 of the present example is arranged between a drive source 2 configured by an electric motor and a differential device 3, and transmits output torque of the drive source 2 to the differential device 3 after increasing the output torque, that is, after reducing rotation, or transmits the output torque of the drive source 2 to the differential device 3 as is without increasing the output torque.

To facilitate understanding of the present disclosure, FIG. 1 to FIG. 2B, schematically illustrate each element of the drive source 2, the differential device 3 and the two-speed transmission 1.

The two-speed transmission 1 of the present example includes an input member 4 that can be rotationally driven by the drive source 2, an output member 5 that is connected to the differential device 3 so as to transmit torque, and an electric friction engaging device 7.

The electric friction engaging device 7 includes a first clutch member, a second clutch member configured by the input member 4 or connected so as to transmit torque from the input member 4, a frictional engagement portion 26, an elastic biasing member 27, a cam device 28, and an electric actuator 29. In the present example, the first clutch member is configured by a rotating member 6. In addition, the second clutch member is configured by the input member 4.

In the present example, the input member 4, which corresponds to the input member and the second clutch member according to the present disclosure, is configured by a housing that houses the two-speed transmission 1, and is rotatably supported by a fixed portion 10 that does not rotate during use. The input member 4 has a cylindrical (hollow) shape. The input member 4 also has an input gear 13 that engages with a drive gear 12 provided on an output shaft 11 of the drive source 2 at an end portion on one side (right side in FIG. 1) in the axial direction.

Moreover, the input member 4, which corresponds to the second clutch member, is coaxial with the rotating member 6, which is the first clutch member, and is able to rotate relative to the rotating member 6, which is the first clutch member.

In the present example, the output member 5 is supported at an inner side in the radial direction of the input member 4 so as to rotate relative to the input member 4. In addition, the output member 5 has an output gear 14 at an end portion on one side in the axial direction. The output gear 14 engages with a gear provided at an input portion of the differential device 3.

In the present example, the rotating member 6 corresponding to the first clutch member is supported by the fixed portion 10 coaxially with the input member 4 and the output member 5, and is supported so as to be able to rotate with respect to the input member 4 and the output member 5.

In the present example, the rotating member 6 has a small-diameter flange portion 15 in an intermediate portion in the axial direction that protrudes outward in the radial direction, and has a flange portion 16 located farther on the other side (left side in FIG. 1) in the axial direction than the small diameter flange portion 15 that protrudes outward in the radial direction.

The flange portion 16 has a hollow circular plate-shaped first circular ring portion 18, a first cylindrical portion 19 that is bent from an end portion on an outer side in the radial direction of the first circular ring portion 18 toward the other side in the axial direction, a hollow circular plate-shaped second circular ring portion 20 that is bent from an end portion on the other side in the axial direction of the first cylindrical portion 19 toward the outside in the radial direction, and a second cylindrical portion 21 that is bent from an end portion on an outer side in the radial direction of the second circular ring portion 20 toward the other side in the axial direction. The first circular ring portion 18 has partially arc-shaped through holes 17 at a plurality of locations in an intermediate portion in the radial direction thereof, through which partially cylindrical portions 63 of a pressing member 58 of the electric friction engagement device 7 are inserted.

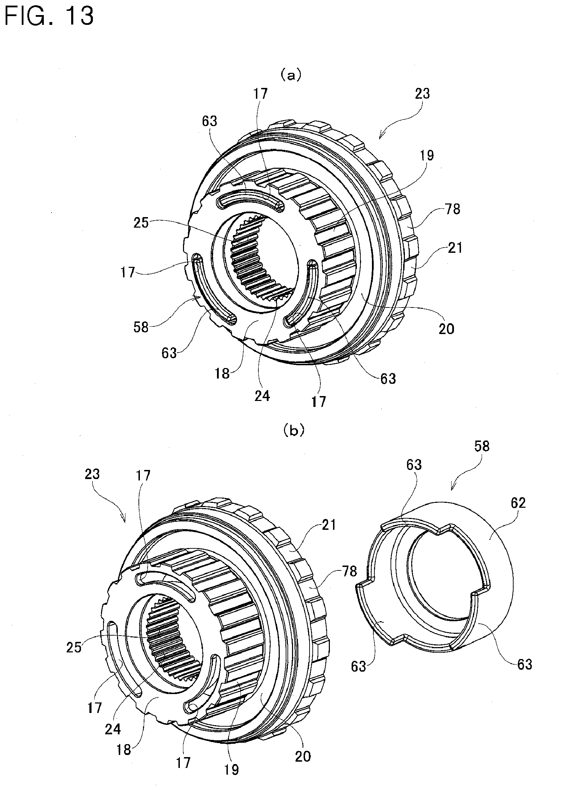

In the present example, the rotating member 6 is configured by externally fitting and fixing a stepped cylindrical member 23 to a shaft member 22 having the small diameter flange portion 15. As illustrated in FIGS. 13A and 13B, the stepped cylindrical member 23 has the flange portion 16, and a small-diameter cylindrical portion 24 that is bent from an end portion on an inner side in the radial direction of the first circular ring portion 18 of the flange portion 16 toward the other side in the axial direction. A female spline portion 25 provided on an inner peripheral surface of the small-diameter cylindrical portion 24 is supported and fixed by a spline engagement with a male spline portion provided on an outer peripheral surface of the shaft member 22. However, the rotating member may also be constructed by coupling and fixing the stepped cylindrical member and the shaft member by press fitting, welding, or the like.

In the present example, the electric friction engaging device 7 is provided between the input member 4 and the rotating member 6, and switches between a connected mode in which torque is transmitted between the input member 4 and the rotating member 6, and a disconnected mode in which torque is not transmitted.

The frictional engagement portion 26 of the electric friction engaging device 7 includes at least one first friction plate 30 and at least one second friction plate 31 that are supported such that relative displacement in the axial direction is possible, and is provided between the first clutch member (rotating member 6) and the second clutch member (input member 4).

The frictional engagement portion 26, by pressing the first friction plate 30 and the second friction plate 31 against each other, switches to a connected state in which torque is transmitted between the first clutch member (rotating member 6) and the second clutch member (input member 4), that is, a state in which the first clutch member (rotating member 6) and the second clutch member (input member 4) rotate as one unit. On the other hand, the frictional engagement portion 26, by releasing the force pressing the first friction plate 30 and the second friction plate 31 against each other, switches to a disconnected state in which torque is not transmitted between the first clutch member (rotating member 6) and the second clutch member (input member 4), that is, a state in which the first clutch member (rotating member 6) and the second clutch member (input member 4) rotate relative to each other.

In the present example, the frictional engagement portion 26 is configured by a multidisc clutch in which a plurality of first friction plates 30 supported by the rotating member 6 and a plurality of second friction plates 31 supported by the input member 4 are alternately stacked.

The plurality of first friction plates 30 are supported on the outer circumferential surface of the first cylindrical portion 19 so as to displace in the axial direction, but so as not to rotate relative to the first cylindrical portion 19.

The plurality of second friction plates 31 are supported on the inner circumferential surface of an end portion on the other side in the axial direction of the input member 4 so as to displace in the axial direction, but so as not to rotate relative to the input member 4.

The elastic biasing member 27 is provided between the first clutch member (rotating member 6) or the second clutch member (input member 4) and the frictional engagement portion 26, and elastically biases the first friction plates 30 and the second friction plates 31 in a direction so as to press against each other. In the present example, the elastic biasing member 27 is provided between the rotating member 6 and the frictional engagement portion 26, and includes a piston 32 and an elastic member 33.

The piston 32 is supported so as to displace in the axial direction relative to the rotating member 6. In the present example, the piston 32 is configured in hollow circular plate shape, and is supported around a portion between the small-diameter flange portion 15 and the flange portion 16 in the axial direction so as to displace in the axial direction with respect to the rotating member 6. The piston 32 makes an end surface on the other side in the axial direction of a portion on the outer side in the radial direction face a surface on the one side in the axial direction of a first friction plate 30 or a second friction plate 31 which is located closest to the one side in the axial direction of the first friction plates 30 and the second friction plates 31.

The elastic member 33 is provided between the rotating member 6 and the piston 32. In the present example, the elastic member 33 is held in an elastically compressed state between a surface on the other side in the axial direction of the small-diameter flange portion 15 of the rotating member 6 and a surface on the one side in the axial direction of the piston 32. In other words, the elastic biasing member 27, by pressing the first friction plate 30 or the second friction plate 31 closest to the one side in the axial direction toward the other side in the axial direction through the piston 32 by a restoring elastic force of the elastic member 33, elastically biases the first friction plates 30 and the second friction plates 31 in a direction in which they press against each other.

In this example, the elastic member 33 is configured by at least one disc spring (two disc springs in the present example). However, in a case of embodying the present disclosure, the specific configuration of the elastic member is not particularly limited. For example, the elastic member may also be configured by at least one coil spring.

The cam device 28 includes a drive cam 34 and a driven cam 35 supported so as to rotate and displace in the axial direction relative to the drive cam 34. As the drive cam 34 rotates, the driven cam 35 relatively displaces in a direction in which the distance in the axial direction from the drive cam 34 increases, and consequently the cam device 28 presses the elastic biasing member 27 in a direction that releases the force pressing the first friction plates 30 and the second friction plates 31 against each other.

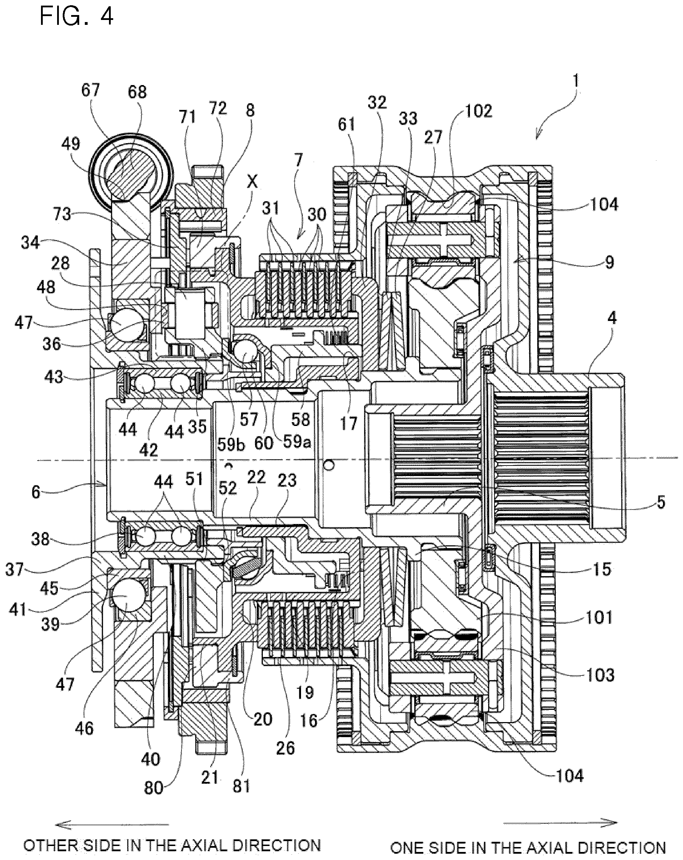

In this example, the drive cam 34 is supported by the rotating member 6 so as to rotate relative to the rotating member 6 and the input member 4, but so as not to displace in the axial direction relative to the rotating member 6. More specifically, as illustrated in FIG. 4 etc., the drive cam 34 is supported by a cylindrical member 37, a radial bearing 38, and an angular ball bearing 39 so as to rotate relative to the rotating member 6.

The cylindrical member 37 includes a cylindrical portion 40 and an outward-facing flange portion 41 bent outward in the radial direction from an end portion on the other side in the axial direction of the cylindrical portion 40. The cylindrical member 37 is supported by and fixed to the fixed portion 10 with the outward-facing flange portion 41 screwed thereon.

The radial bearing 38 includes an inner ring 42 that is externally fitted and fixed to an end portion on the other side in the axial direction of the rotating member 6, an outer ring 43 that is internally fitted and fixed to the cylindrical portion 40 of the cylindrical member 37, and a plurality of rolling elements 44 are arranged between the inner ring 42 and the outer ring 43 so as to roll freely. In the illustrated example, the radial bearing 38 is configured by a double-row deep groove ball bearing using balls as the rolling elements 44. However, the radial bearing is not particularly limited as long as the radial bearing allows relative rotation between the first member and the cam device and is able to support the biasing force in the axial direction by the elastic biasing member; and for example, the radial bearing may also be configured by a deep groove ball bearing, a radial angular contact ball bearing, a radial tapered roller bearing, or the like.

The angular ball bearing 39 includes an inner ring 45 that is externally fitted and fixed to the cylindrical portion 40 of the cylindrical member 37, an outer ring 46 that is internally fitted and fixed to the drive cam 34, and a plurality of balls 47 arranged between the inner ring 45 and the outer ring 46 so as to roll freely.

The driven cam 35 is arranged around the rotating member 6 so as to displace only in the axial direction. In the present example, the driven cam 35 has a hollow circular plate shape, and is supported so as to displace in the axial direction with respect to the fixed portion 10. In the present example, by engaging a female spline portion 51 provided on an inner peripheral surface of the driven cam 35 with a male spline portion 52 provided on an outer peripheral surface of a portion on one side in the axial direction of the cylindrical portion 40 of the cylindrical member 37 with a spline engagement, the driven cam 35 is supported so as to displace in the axial direction with respect to the fixed portion 10.

However, the method of supporting the driven cam with respect to the fixed portion is not particularly limited as long as the driven cam can be supported so as to displace only in the axial direction with respect to the fixed portion. For example, the driven cam may be supported so as to displace in the axial direction with respect to the fixed portion by engaging a protruding portion provided on one of the driven cam and the fixed portion with a recessed groove provided on the other with a key engagement.

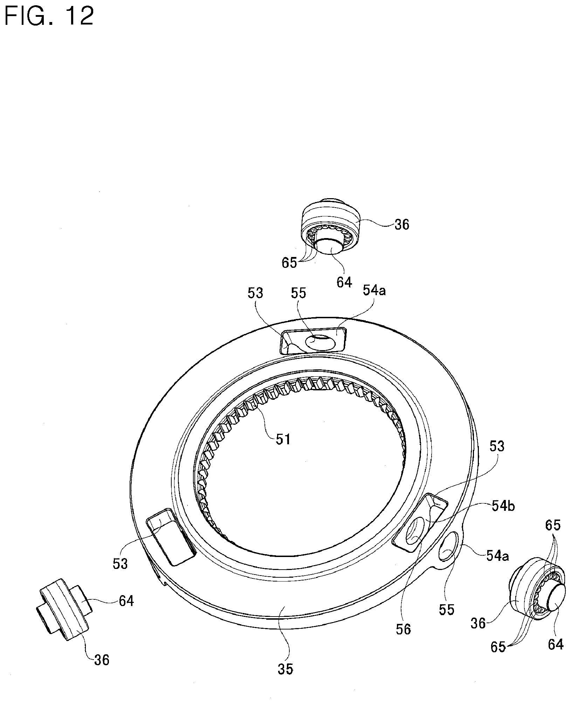

As illustrated in FIG. 12, the driven cam 35 has rectangular holes 53 that penetrate in the axial direction at a plurality of locations (three locations in the illustrated example) in the circumferential direction of an intermediate portion in the radial direction, and substantially semicircular plate-shaped support plate portions 54a, 54b that protrude from portions on both sides in the radial direction of the respective rectangular holes 53 toward the other side in the axial direction. Of the support plate portions 54a, 54b, the support plate portion 54a on an outer side in the radial direction includes a support hole 55 that is a circular hole penetrating in the radial direction, and the support plate portion 54b on an inner side in the radial direction includes a support recess portion 56 having a circular opening on an outer surface in the radial direction.

The driven cam 35 faces the piston 32 of the elastic biasing member 27 through a thrust bearing 57 and the pressing member 58.

The thrust bearing 57 is provided between the pressing member 58 and the driven cam 35. The thrust bearing 57 includes a pair of bearing rings 59a, 59b, and a plurality of rolling elements 60 that are arranged between the pair of bearing rings 59a, 59b so as to roll freely. Of the pair of bearing rings 59a, 59b, the bearing ring 59b on the other side in the axial direction is supported by and fixed to the driven cam 35.

The pressing member 58 includes a cylindrical base portion 62 and partial cylindrical portions 63 that protrude toward the one side in the axial direction from a plurality of locations (three locations in the illustrated example) in the circumferential direction at an end portion on the one side in the axial direction of the base portion 62. A bearing ring 59a on the one side in the axial direction of the pair of bearing rings 59a, 59b of the thrust bearing 57 is supported by and fixed to an end portion on the other side in the axial direction of the base portion 62. The partial cylindrical portions 63 are inserted through the through holes 17 of the rotating member 6, and a tip end portions (end portions on the one side in the axial direction) of the partial cylindrical portions 63 face an intermediate portion in the radial direction of a surface on the other side in the axial direction of the piston 32.

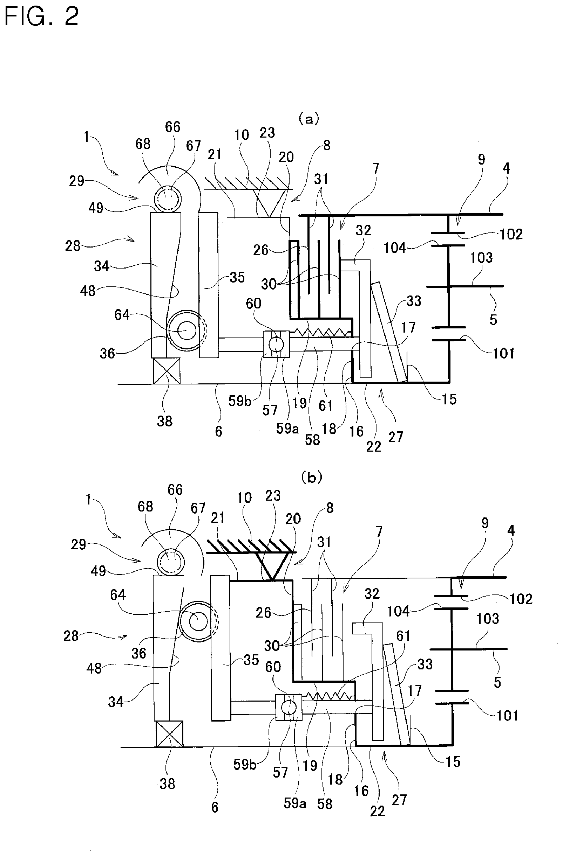

In the present example, a preload applying means 61 for applying a preload to the thrust bearing 57 is provided between the pressing member 58 and the rotating member 6. The preload applying means 61 is held in a state of being elastically compressed between the pressing member 58 and a surface on the other side in the axial direction of the first circular ring portion 18 of the flange portion 16 of the rotating member 6. As a result, as illustrated in FIG. 2B, even when the piston 32 is pressed toward the one side in the axial direction against the elastic restoring force of the elastic member 33, a preload is applied to the thrust bearing 57, preventing the thrust bearing 57 from falling out from between the elastic biasing member 27 and the cam device 28.

Note that the elastic force of the preload applying means 61 is smaller than the elastic restoring force of the elastic member 33. The preload applying means 61 may be configured by, for example, at least one disc spring or at least one coil spring. In the present example, the preload applying means 61 is configured by one coil spring.

In the present example, the cam device 28, as a means for relatively displacing the drive cam 34 and the driven cam 35, includes a plurality (three in the present example) of rolling elements 36, and a drive cam surface 48 provided on the drive cam 34.

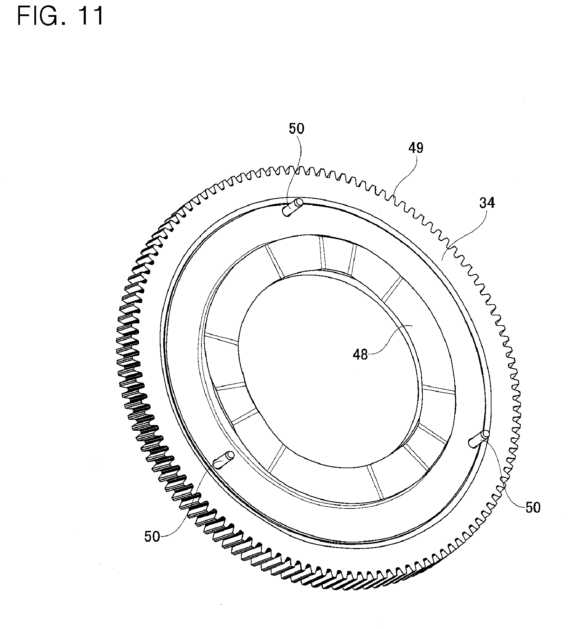

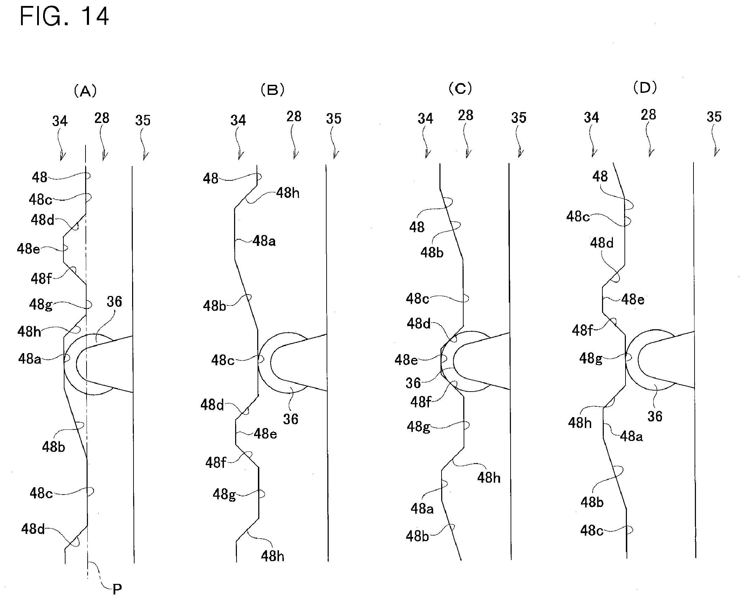

As illustrated in FIG. 11, the drive cam surface 48 is configured by alternately arranging the same number of recessed portions and protruding portions in the circumferential direction on a portion on an inner side in the radial direction of a surface on the one side in the axial direction of the drive cam 34. As illustrated in FIGS. 14A to 14D, the drive cam surface 48 is configured by repeatedly arranging in order a first bottom portion 48a, a first inclined surface portion 48b, a first flat surface portion 48c, a second inclined surface portion 48d, a second bottom portion 48e, a third inclined surface portion 48f, a second flat surface portion 48g, and a fourth inclined surface portion 48h as many times as the number of rolling elements 36 (three times in the present example).

Of the drive cam surface 48, the first flat surface portion 48c and the second flat surface portion 48g are located the farthest on the one side in the axial direction, that is, located at a tip end portion of the protruding portion, and the first bottom portion 48a and the second bottom portion 48e are located the farthest on the other side in the axial direction. The angle of inclination of the third inclined surface portion 48f and the fourth inclined surface portion 48h with respect to the virtual plane P perpendicular to the central axis of the drive cam 34 is larger than that of the first inclined surface portion 48b with respect to the virtual plane P.

The angle of inclination of the first inclined surface portion 48b, and the angle of inclination of the third inclined surface portion 48f and the fourth inclined surface portion 48h are all large enough to allow the rolling elements 36 to move either by rolling down or by riding up. The third inclined surface portion 48f and the fourth inclined surface portion 48h have opposite inclination directions and the same inclination angle.

However, the inclination angles of the third inclined surface portion 48f and the fourth inclined surface portion 48h may also be made different from each other. Moreover, the inclination angle of the first inclined surface portion 48b and the inclination angles of the third inclined surface portion 48f and the fourth inclined surface portion 48h may be made the same.

The angle of inclination of the second inclined surface portion 48d with respect to the virtual plane P may be set to any size as long as the rolling elements 36 may ride up.

Each of the rolling elements 36 has a cylindrical shape, and is supported through a cylindrical support shaft 64 and a plurality of rollers 65 so as to roll freely with respect to the support plate portions 54a, 54b. That is, an end portion on an outer side in the radial direction of the support shaft 64 which is centered on a central axis of the driven cam 35 is internally fitted and fixed to the support hole 55 of the support plate portion 54a on the outer side in the radial direction, and an end portion on an inner side in the radial direction of the support shaft 64 which is centered on the central axis of the driven cam 35 is internally fitted and fixed to the support recess portion 56 of the support plate portion 54b on the inner side in the radial direction.

The plurality of rollers 65 are held so as to roll freely between an inner peripheral surface of the rolling element 36 and an outer peripheral surface of an intermediate portion in the axial direction of the support shaft 64. As a result, each of the rolling elements 36 is supported by the driven cam 35 so as to freely rotate (spin) about a rotation axis C that is oriented in the radial direction about the central axis of the driven cam 35.

In a state in which the rolling elements 36 are supported by the driven cam 35, a portion on the one side in the axial direction of each of the rolling element 36 is arranged inside a rectangular hole 53. The outer peripheral surface of each of the rolling element 36 is brought into rolling contact with the drive cam surface 48 provided on a surface on the other side in the axial direction of the drive cam 34.

In the two-speed transmission 1 of the present example, by rotationally driving the drive cam 34 to increase or decrease the amount that the rolling elements 36 ride up from the first bottom portion 48a or the second bottom portion 48e of the drive cam surface 48, the driven cam 35 is moved in the axial direction to switch the frictional engagement portion 26 between a connected state and a disconnected state.

As illustrated in FIGS. 14B and 14D, in a case where the frictional engagement portion 26 is in the disconnected state, the rolling element 36 is positioned on the first flat surface portion 48c or the second flat surface portion 48g of the drive cam surface 48, or the amount of riding up on the first inclined surface portion 48b, the second inclined surface portion 48d, the third inclined surface portion 48f, or the fourth inclined surface portion 48h is increased.

By moving the driven cam 35 to the one side in the axial direction, which is a direction in which the axial distance between the driven cam 35 and the drive cam 34 increases, the piston 32 of the elastic biasing member 27 is pressed toward the one side in the axial direction through the thrust bearing 57 and the pressing member 58, and the elastic member 33 is elastically compressed. As a result, the force pressing the first friction plates 30 and the second friction plates 31 against each other is reduced and eventually lost. By disconnecting the frictional engagement portion 26 in this way, the electric friction engaging device 7 is switched to the disconnected mode.

On the other hand, as illustrated in FIGS. 14A and 14C, in a case where the frictional engagement portion 26 is brought into the connected state, the rolling element 36 is positioned at the first bottom portion 48a or the second bottom portion 48e of the drive cam surface 48, or the amount of riding up on the first inclined surface portion 48b, the second inclined surface portion 48d, the third inclined surface portion 48f, or the fourth inclined surface portion 48h is reduced.

As a result, by moving the driven cam 35 to the other side in the axial direction, which is a direction in which the distance in the axial direction from the drive cam 34 is reduced, the force that presses the piston 32 of the elastic biasing member 27 toward the one side in the axial direction is reduced. When the force pushing the piston 32 toward the one side in the axial direction decreases, the piston 32, the thrust bearing 57, and the pressing member 58 are pressed toward the other side in the axial direction mainly due to the elastic restoring force of the first friction plate 30 and the elastic member 33, and the piston 32 presses the first friction plate 30 or the second friction plate 31 closest to the one side in the axial direction toward the other side in the axial direction. Therefore, the first friction plates 30 and the second friction plates 31 press against each other, connecting the frictional engagement portion 26, and consequently the electric friction engaging device 7 is switched to the connected mode.

In the two-speed transmission 1 of the present example, the driven cam 35 can reliably displace in the axial direction due to the rotation of the drive cam 34, and the mode switching of the two-speed transmission 1 can be performed with high accuracy.

In a case where balls are used as the rolling elements, and when the drive cam is rotated, there is a possibility that slippage may occur at the area of rolling contact between the surface of the rolling elements and the drive cam surface. In a case where slippage occurs at the area of the rolling contact between the surface of the rolling elements and the drive cam surface, the driven cam may not displace in the axial direction, or there is a possibility that a sufficient amount of displacement in the axial direction of the driven cam relative to the amount of rotation of the drive cam may not be secured.

In the two-speed transmission 1 of the present example, rollers are used as the rolling elements 36, and the rolling elements 36 are supported by the driven cam 35 so as to freely rotate (spin) about a rotation axis C that is oriented in the radial direction and is centered on the central axis of the driven cam 35. Therefore, slippage can be prevented from occurring at the area of rolling contact between the outer peripheral surface of the rolling elements 36 and the drive cam surface 48, and the driven cam 35 can reliably displace in the axial direction based on the rotation of the drive cam 34. As a result, mode switching of the two-speed transmission 1 can be performed with high accuracy. However, as mentioned above, balls may also be used as the rolling elements of the cam device.

In the present example, the cam device 28 is configured by sandwiching the rolling elements 36 between the drive cam 34 and the driven cam 35; however, in a case of implementing a technique according to the present disclosure, the cam device is not particularly limited as long as the cam device is able to press the elastic biasing member in a direction that releases the force that presses the first friction plate and the second friction plate against each other, and any other known means may be used.

For example, as a cam device, a structure in which the rolling elements are arranged between the drive cam surface of the drive cam and the driven cam surface of the driven cam, a structure in which the drive cam surface of the drive cam and the driven cam surface of the driven cam are directly engaged (sliding), a structure including a driven cam, having a guide groove on the outer peripheral surface extending in the circumferential direction and changing in the axial direction, and a drive cam, having an engaging protruding portion that engages to enable displacement along the guide groove, or the like may be used.

The electric actuator 29 includes a shift motor 66 and a reduction gear 67, and makes the shift motor 66 rotationally drive the drive cam 34 through the reduction gear 67.

In the present example, the reduction gear 67 is configured by a worm reducer. That is, the reduction gear 67 is configured by engaging worm teeth provided on the outer peripheral surface of a worm 68 connected to the output shaft of the shift motor 66 with wheel teeth 49 provided on the outer peripheral surface of the drive cam 34. The worm 68 is rotatably supported with respect to the fixed portion 10 by a pair of support bearings 69a, 69b.

However, the reduction gear 67 may be configured by engaging a spur gear or bevel gear provided on the output shaft of the electric motor with a spur gear or bevel gear provided on the drive cam, or may be configured by passing a belt or chain between the output shaft of the electric motor and the drive cam.

In the present example, a return spring 70 is further provided between the first friction plate 30 and the second friction plate 31, and is biased elastically in a direction to increase the distance between the first friction plate 30 and the second friction plate 31. The elastic force of the return spring 70 is smaller than the elastic restoring force of the elastic member 33 of the elastic biasing member 27. When the frictional engagement portion 26 is switched to a disconnected state, the distance between the first friction plate 30 and the second friction plate 31 increases due to the action of the return spring 70, making it possible to reliably disconnect the frictional engagement portion 26.

The two-speed transmission 1 of the present example is configured so that, by switching between the connected state and the disconnected state of the frictional engagement portion 26, the two-speed transmission 1 switches between a high reduction ratio mode in which the reduction ratio between the input member 4 and the output member 5 is large, and a low reduction ratio mode where the reduction ratio between input member 4 and output member 5 is small.

In the high reduction ratio mode, rotation of the first clutch member (rotating member 6) is prevented, and the first clutch member (rotating member 6) and the second clutch member (input member 4) are allowed to rotate relative to each other. In the low reduction ratio mode, the first clutch member (rotating member 6) and the second clutch member (input member 4) rotate together.

In the two-speed transmission 1 of the present example, the mode of the electric friction engaging device 7 may be switched based on rotationally driving one drive cam 34 by the electric actuator 29. That is, the two-speed transmission 1 of the present example does not require a hydraulic system for controlling frictional engagement devices such as clutches and brakes. Therefore, in electric vehicles and hybrid vehicles, it is possible to simplify the system, reduce costs, and improve electricity consumption performance.

The two-speed transmission of the present example has a first function of, when rotationally driving the drive cam 34 by the shift motor 66 through the reduction gear 67 in order to switch the frictional engagement portion 26 from the connected state to the disconnected state, detecting a phase in the rotational direction of the drive cam 34 when the output torque or current value of the shift motor 66 starts to increase at an increase rate equal to or higher than a first threshold value, as a piston touch point θₚ where the elastic biasing member 27 begins to be pressed in the direction of releasing the force pressing the first friction plate 30 and the second friction plate 31 against each other (the engagement force F of the friction engagement portion 26 begins to decrease).

Additionally or alternatively, the two-speed transmission 1 of the present example has a second function of, when the drive cam 34 is rotationally driven by the shift motor 66 through the reduction gear 67 in order to switch the frictional engagement portion 26 from the connected state to the disconnected state, detecting the phase in the rotational direction of the drive cam 34, after exceeding the piston touch point θₚ, when the increase rate becomes equal to or less than a second threshold value, as a clutch touch point θ_{f} at which the force pressing the first friction plate 30 and the second friction plate 31 against each other (the engagement force F of the friction engagement portion 26) becomes 0.

Furthermore, the two-speed transmission 1 of the present example has a third function of, when switching between the high reduction ratio mode and the low reduction ratio mode, adjusting the rotation amount of the drive cam 34 rotationally driven by the shift motor 66 through the reduction gear 67 based on the piston touch point θₚ detected by the first function and/or the clutch touch point θ_{f} detected by the second function.

The two-speed transmission 1 of the present example has a function of, together with controlling output torque and rotational speed Rs of the drive source 2 and rotational speed (rotation amount) of the shift motor 66 in order to prevent the occurrence of transmission shock caused by switching from the high reduction ratio mode to the low reduction ratio mode, switching the two-speed transmission 1 to a reduction ratio switching mode. As a result, it becomes possible to switch from the high reduction ratio mode to the low reduction ratio mode while preventing the rotational torque of the output member 5 from changing discontinuously.

Regarding the two-speed transmission 1 of the present example, additional components will be explained, and then each of the above-mentioned functions will be further explained.

The two-speed transmission 1 of the present example further includes a rotation transmission state switching device 8 and a planetary reduction mechanism 9.

More specifically, the two-speed transmission 1 of the present example switches the transmission path of torque transmitted through the planetary reduction mechanism 9 by switching the mode of the electric friction engaging device 7 and the mode of the rotation transmission state switching device 8.

Note that the rotating member 6 corresponding to the first clutch member is rotatably supported by the fixed portion 10 through the rotation transmission state switching device 8, the cam device 28, and the radial bearing 38 for rotatably supporting the drive cam 34 with respect to the rotating member 6.

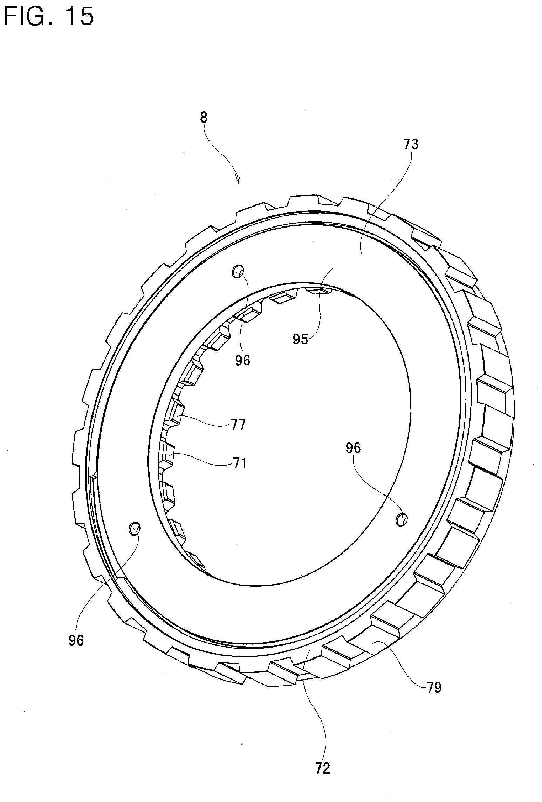

As illustrated in FIGS. 15 to 18, the rotation transmission state switching device 8 includes a first member 71 and a second member 72 that are arranged coaxially with each other, and a mode selecting member 73 that rotates as the drive cam 34 rotates.

The rotation transmission state switching device 8 of the present example has: a free mode in which rotation of the first member 71 with respect to the second member 72 is allowed regardless of the relative rotational direction between the first member 71 and the second member 72; a lock mode in which rotation of the first member 71 with respect to the second member 72 is prevented regardless of the relative rotation direction between the first member 71 and the second member 72; and a one-way clutch mode in which only rotation of the first member 71 in a predetermined direction with respect to the second member 72 is allowed. More specifically, the rotation transmission state switching device 8 of the present example switches between the free mode, the lock mode, and the one-way clutch mode based on the rotation of the mode selecting member 73.

The first member 71 has a gear-shaped uneven portion 76 on an outer peripheral surface thereof, in which engagement recess portions 74 and protruding portions 75 are alternately arranged in the circumferential direction. The first member 71 has an outer diameter side uneven engaging portion 77 formed by alternately arranging recess portions and protruding portions in the circumferential direction on an inner peripheral surface thereof. The first member 71 is supported so as not to rotate relative to the rotating member 6 by the outer diameter side uneven engaging portion 77 engaging with an inner diameter side uneven engaging portion 78 provided on the outer peripheral surface of the second cylindrical portion 21 of the rotating member 6, and rotates integrally with the rotating member 6.

The second member 72 is supported around the first member 71 coaxially with the first member 71 so as to rotate relative to the first member 71. The inner peripheral surface of the second member 72 faces tip end surfaces of the protruding portions 75 of the first member 71 with a gap therebetween. The second member 72 has an inner diameter side uneven engaging portion 79 formed by alternately arranging recess portions and protruding portions in the circumferential direction on an outer peripheral surface thereof. The second member 72 is supported so as not to rotate relative to the fixed portion 10 by the inner diameter side uneven engaging portion 79 engaging with an outer diameter side uneven engaging portion provided on the inner peripheral surface of the fixed part 10.

The second member 72 includes a base portion 80 having a rectangular cross-sectional shape, and a cylindrical portion 81 that protrudes from an end portion on an outer side in the radial direction of a surface on the one side in the axial direction of the base portion 80 toward the one side in the axial direction over the entire circumference.

The base portion 80 has a plurality of first holding recess portions 82 and a plurality of second holding recess portions 83 (six each in the illustrated example) arranged alternately in the circumferential direction.

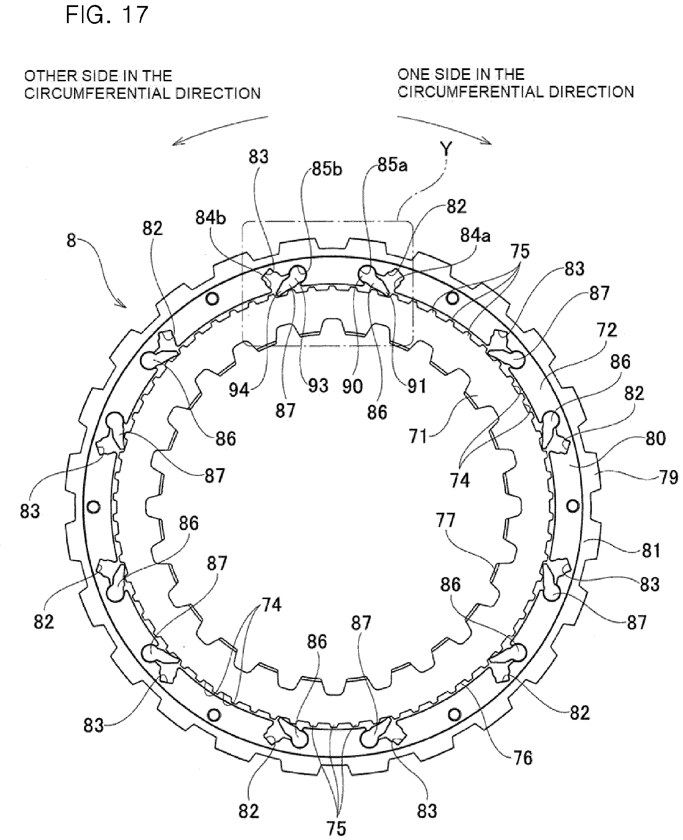

Each of the first holding recess portions 82 is open to an inner peripheral surface of the base portion 80 and a surface on the other side in the axial direction. The first holding recess portion 82 includes a spring holding portion 84a and a pedestal portion 85a. The spring holding portion 84a, as viewed from the other side in the axial direction, has a substantially rectangular opening shape with a long axis in a direction extending toward the outer side in the radial direction as going toward one side in the circumferential direction (front side in the clockwise direction in FIGS. 17 to 19). The pedestal portion 85a has a substantially circular opening shape as viewed from the other side in the axial direction, and is arranged adjacent to the other side in the circumferential direction (the rear side in the clockwise direction in FIGS. 17 to 19) of the spring holding portion 84a.

Each of the second holding recess portions 83 is open to the inner peripheral surface and a surface on the other side in the axial direction of the base portion 80, and includes a spring holding portion 84b and a pedestal portion 85b. The second holding recess portion 83, when viewed from the other side in the axial direction, has a shape that is symmetrical to the first holding recess portion 82 with respect to a virtual plane that includes the central axis of the second member 72.

The rotation transmission state switching device 8, in order to achieve the free mode, the lock mode, and the one-way clutch mode, includes, between the first member 71 and the second member 72, a first pawl member 86 and a second pawl member 87, and a first pawl biasing member 88 and a second pawl biasing member 89. In the present example, the numbers of the first pawl members 86, the second pawl members 87, the first pawl biasing members 88, and the second pawl biasing members 89 are plural and the same number.

Each first pawl member 86 includes a first base portion 90 and a first engagement pawl 91.

The first base portion 90 has a substantially cylindrical shape and is supported (pivotally supported) on the pedestal portion 85a of the first holding recess portion 82 so as to pivot about a pivot axis parallel to the central axis of the second member 72.

The first engagement pawl 91 is configured in a substantially flat plate shape and extends from the first base portion 90 toward the one side in the circumferential direction. The first engagement pawl 91 has a portion on the other side in the axial direction that faces (engages with) an outer peripheral surface of an annular-shaped protruding portion 92 of the mode selecting member 73, and has a portion on the one side in the axial direction that faces an uneven portion 76 of the first member 71 (engages with the engagement recess portion 74 so as to engage and disengage).

Each second pawl member 87 includes a second base portion 93 supported by the pedestal portion 85b of the second holding recess portion 83 so as to pivot, and a second engagement pawl 94 extending from the second base portion 93 toward the other side in the circumferential direction The second pawl member 87, when viewed from the other side in the axial direction, has a shape that is symmetrical to the first engagement pawl 91 with respect to a virtual plane including the central axis of the second member 72, and is arranged symmetrically with the first engagement pawl 91.

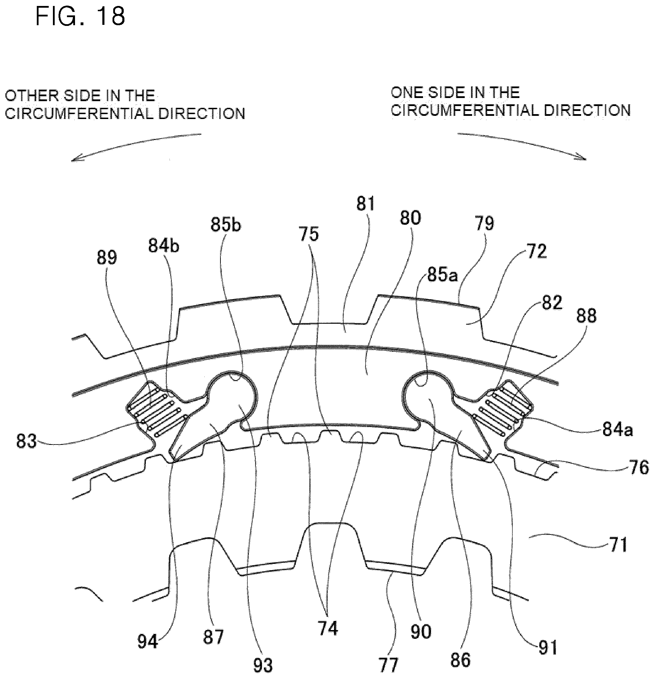

The first pawl biasing member 88 elastically biases the first engagement pawl 91 of the first pawl member 86 in a direction to engage with the engagement recess portion 74 of the first member 71. That is, the first pawl biasing member 88 applies a biasing force to the first pawl member 86 in the direction of pivoting clockwise in FIG. 18 with the first pawl member 86 being centered around the central axis (pivot axis) of the first base portion 90. More specifically, the first pawl biasing member 88 is configured by an elastic member such as a coil spring, and is held in an elastically compressed state between a bottom surface (surface facing inward in the radial direction) of the spring holding portion 84a of the first holding recess portion 82 and an outer surface in the radial direction of the first engagement pawl 91.

The second pawl biasing member 89 is configured by an elastic member similar to the first pawl biasing member 88, and when viewed from the other side in the axial direction, the second pawl biasing member 89 is arranged symmetrically with the first pawl biasing member 88 with respect to a virtual plane that includes the central axis of the second member 72. That is, the second pawl biasing member 89 is held in an elastically compressed state between a bottom surface of the spring holding portion 84b of the second holding recess portion 83 and an outer surface in the radial direction of the second engagement pawl 94, and elastically biases the second engagement pawl 94 of the second pawl member 87 in a direction to engage with the engagement recess portion 74 of the first member 71.

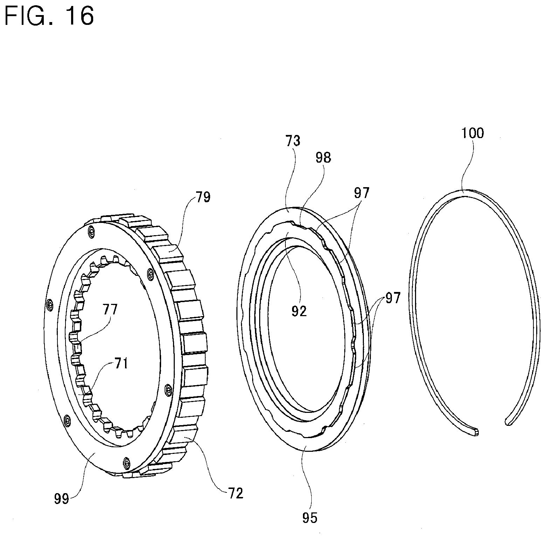

As illustrated in FIG. 16, the mode selecting member 73 includes a substantially circular plate-shaped base portion 95 and an annular protruding portion 92 that protrudes over the entire circumference from an intermediate portion in the radial direction of a surface on the other side in the axial direction of the base portion 95 toward the other side in the axial direction.

The base portion 95 has plate-side engagement holes 96 at a plurality of locations (three locations in the illustrated example) at equal intervals in the circumferential direction of an intermediate portion in the radial direction of a surface on the other side in the axial direction. An end portion on the one side in the axial direction of a pin portion 50 is internally fitted (engaged with) each plate-side engagement hole 96. That is, the mode selecting member 73 rotates integrally with the drive cam 34 (in the same direction and at the same speed).

The annular protruding portion 92, at a plurality of locations in the circumferential direction on an outer peripheral surface thereof, has protruding portions 97 that protrude outward in the radial direction. That is, the annular protruding portion 92, on the outer peripheral surface thereof, has a gear-shaped uneven portion 98 formed by alternately arranging protruding portions 97 and recessed portions in the circumferential direction.

The first member 71, the second member 72, and the mode selecting member 73 are combined by a cover 99 and a retaining ring 100 such that relative rotation is possible, and such that relative displacement in the axial direction is not possible (so that there is no inadvertent separation in the axial direction), and form the rotation transmission state switching device 8.

In a state in which the first member 71 is arranged on an inner side in the radial direction of a portion on the one side in the axial direction of the base portion 80 of the second member 72, the ring-shaped cover 99 is supported by and fixed to a surface on the one side in the axial direction of the second member 72 by screws, and a surface on the other side in the axial direction of a portion on an inner side in the radial direction of the cover 99 is made to face a surface on the one side in the axial direction of the first member 71. As a result, the first member 71 is prevented from being displaced to the one side in the axial direction with respect to the second member 72.

In a state in which the annular protruding portion 92 of the mode selecting member 73 is arranged on an inner side in the radial direction of a portion on the other side in the axial direction of the base portion 80 of the second member 72, a tip end surface (surface on the one side in the axial direction) of the annular protruding portion 92 is made to come in sliding contact with or to closely face a surface on the other side in the axial direction of the first member 71, and a surface on the one side in the axial direction of a portion on an outer side in the radial direction of the base portion 95 is made to come in sliding contact with or to closely face a surface on the other side in the axial direction of the base portion 80 of the second member 72, the retaining ring 100 is secured to an end portion on the other side in the axial direction of the inner peripheral surface of the cylindrical portion 81 of the second member 72. As a result, the first member 71 and the mode selecting member 73 are prevented from being displaced toward the other side in the axial direction with respect to the second member 72.

The rotation transmission state switching device 8 is configured, based on the rotation of the mode selecting member 73, to be able to switch between the free mode, the lock mode, and the one-way clutch mode by switching between an engagement state between the first engagement pawl 91 of the first pawl member 86 and the engagement recess portion 74 of the first member 71 and an engagement state between the second engagement pawl 94 of the second pawl member 87 and the engagement recess portion 74.

### <Free Mode>

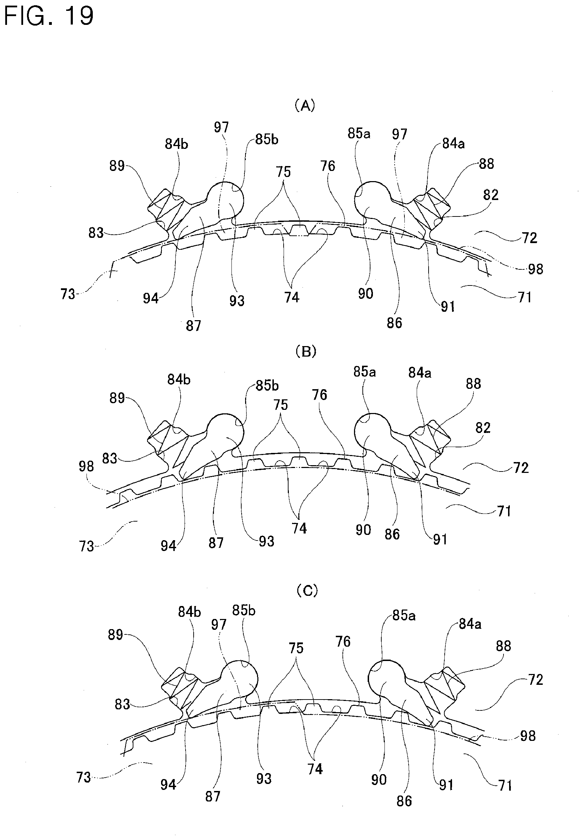

In the free mode, a phase in the circumferential direction of the mode selecting member 73 with respect to the second member 72 is adjusted, and as illustrated in FIG. 19A, the protruding portion 97 pushes the first engaging pawl 91 up outward in the radial direction against the elastic force of the first pawl biasing member 88, and also pushes the second engagement pawl 94 up outward in the radial direction against the elastic force of the second pawl biasing member 89.

As a result, engagement between the engagement recess portion 74 of the first member 71 and the first engagement pawl 91 and the second engagement pawl 94 is released. In this state, rotation of the first member 71 with respect to the second member 72 is allowed regardless of the direction of relative rotation between the first member 71 and the second member 72. That is, the rotation of the first member 71 with respect to the fixed portion 10 is allowed regardless of the direction of rotation of the first member 71.

### <Lock Mode>

In the lock mode, a phase in the circumferential direction of the mode selecting member 73 with respect to the second member 72 is adjusted, and as illustrated in FIG. 19B, the protruding portion 97 is located at a portion separated in the circumferential direction from the first engagement pawl 91 of the first pawl member 86 and the second engagement pawl 94 of the second pawl member 87. That is, in the circumferential direction, phases of the recessed portions of the uneven portion 98 and the first engagement pawls 91 and the second engagement pawls 94 are matched.

As a result, the engagement recess portions 74 of the first member 71 engage with the first engagement pawls 91 and the second engagement pawls 94. In this state, rotation of the first member 71 with respect to the second member 72 is prevented regardless of the direction of relative rotation between the first member 71 and the second member 72. That is, the rotation of the first member 71 with respect to the fixed portion 10 is prevented regardless of the direction of rotation of the first member 71.

### <One-way Clutch Mode>

In the one-way clutch mode, the phase in the circumferential direction of the mode selecting member 73 with respect to the second member 72 is adjusted, and as illustrated in FIG. 19C, the protruding portion 97 pushes only the second engagement pawl 94 up outward in the radial direction against the elastic force of the second pawl biasing member 89.

As a result, the engagement recess portions 74 of the first member 71 and the first engagement pawls 91 are engaged, and the engagement of the engagement recess portions 74 and the second engagement pawls 94 is released. In this state, only rotation of the first member 71 in the predetermined direction (clockwise in FIG. 19C) with respect to the second member 72 is allowed, and rotation in the opposite direction to the predetermined direction (counterclockwise direction in FIG. 19C) is prevented.

That is, when the first member 71 tries to rotate in the predetermined direction with respect to the second member 72, the protruding portion 75 of the uneven portion 76 push the first engaging pawl 91 up outward in the radial direction against the elastic force of the first pawl biasing member 88. As a result, rotation of the first member 71 in the predetermined direction is allowed. On the other hand, in a case where the first member 71 tries to rotate in the opposite direction to the predetermined direction with respect to the second member 72, the engagement between the engagement recess portion 74 and the first engagement pawl 91 prevents the first member 71 from rotating in the opposite direction to the predetermined direction. That is, the rotation transmission state switching device 8 operates as a ratchet type one-way clutch.

Note that the predetermined direction coincides with a forward rotation direction of the input member 4. The forward rotation direction of the input member 4 refers to a rotation direction of the input member 4 when moving the automobile forward.

The planetary reduction mechanism 9 includes a sun gear 101, a ring gear 102, a carrier 103, and a plurality of planetary gears 104. In other words, in this example, the planetary reduction mechanism 9 is configured by a single pinion type planetary gear mechanism.

The sun gear 101 is connected to the rotating member 6 so as to transmit torque. In the present example, the sun gear 101 is provided at an end portion on the one side in the axial direction of the rotating member 6.

The ring gear 102 is arranged around the sun gear 101 and coaxially with the sun gear 101, and is connected to the input member 4 so as to transmit torque. In the present example, the ring gear 102 is provided at an intermediate portion in the axial direction of the input member 4.

The carrier 103 is arranged between the sun gear 101 and the ring gear 102 in the radial direction, coaxially with the sun gear 101 and the ring gear 102, and is connected to the output member 5 so as to transmit torque.

The plurality of planetary gears 104 respectively engages with the sun gear 101 and the ring gear 102, and is supported by the carrier 103 so as to rotate (spin) about its own central axis.

In a case of implementing the technique according to the present disclosure, a double pinion type planetary gear mechanism may also be employed as the planetary reduction mechanism. Alternatively, the planetary reduction mechanism may be configured by a friction roller mechanism that includes a sun roller, a ring roller arranged around the sun roller, and planetary roller that is arranged between the sun roller and the ring roller in the radial direction, the outer peripheral surface of which is a rolling surface that is frictionally engaged with the outer peripheral surface of the sun roller and the inner peripheral surface of the ring roller.

In the two-speed transmission 1 of the present example, by switching the mode of the electric friction engaging device 7 and the mode of the rotation transmission state switching device 8, it is possible to switch between a low reduction ratio mode in which the reduction ratio between the input member 4 and the output member 5 is small, and a high reduction ratio mode in which the reduction ratio is larger than the low reduction ratio mode.

Moreover, the two-speed transmission 1 of the present example passes through a reduction ratio switching mode during switching from the high reduction ratio mode to the low reduction ratio mode. Furthermore, the two-speed transmission 1 of the present example can also be switched to a neutral mode in which torque is not transmitted between the input member 4 and the output member 5, and a parking mode in which the rotation of the output member 5 is locked.

### <Low Reduction Ratio Mode>

To switch the two-speed transmission 1 to the low reduction ratio mode, the electric friction engaging device 7 is switched to the connected mode, and the rotation transmission state switching device 8 is switched to the free mode.

In the present example, due to the rotating of the drive cam 34 by the electric actuator 29, each rolling elements 36 is positioned at the first bottom portion 48a of the drive cam surface 48, and the driven cam 35 is displaced in a direction in which the distance in the axial direction from the drive cam 34 is reduced (toward the other side in the axial direction). As a result, the force of the elastic biasing member 27 that presses the piston 32 toward the one side in the axial direction is lost.

Mainly due to the elastic restoring force of the first friction plate 30 and the elastic member 33, the piston 32, the thrust bearing 57, and the pressing member 58 are pressed toward the other side in the axial direction, and the piston 32 presses the first friction plate 30 or the second friction plate 31 closest on the one side in the axial direction toward the other side in the axial direction.

Therefore, the first friction plates 30 and the second friction plates 31 press against each other, and by connecting the frictional engagement portion 26, the electric friction engaging device 7 is switched to the connected mode. As a result, the input member 4 and the rotating member 6 come to rotate integrally, and the sun gear 101 and the ring gear 102 come to rotate integrally.

At the same time as switching the electric friction engaging device 7 to the connected mode, due to adjusting the phase in the circumferential direction of the mode selecting member 73 with respect to the second member 72, as illustrated in FIG. 19A, the protruding portion 97 pushes up the first engagement pawl 91 outward in the radial direction, and also pushes up the second engagement pawl 94 outward in the radial direction.

Therefore, the engagement recess portions 74 of the first member 71 are disengaged from the first engagement pawls 91 and the second engagement pawls 94, and the rotation transmission state switching device 8 switches to the free mode in which rotation of the first member 71 with respect to the second member 72 is allowed, regardless of the relative rotation direction between the first member 71 and the second member 72. As a result, rotation of the rotating member 6 with respect to the fixed portion 10 is allowed, and rotation of the sun gear 101 is allowed.

In the low reduction ratio mode, the rotational direction and rotational speed of the sun gear 101, ring gear 102, and carrier 103 are the same, and the entire planetary reduction mechanism 9 rotates as one in a so-called glued state. Therefore, as illustrated by the bold line in FIG. 2A, the rotational torque of the input member 4 is transmitted to the input member 4, the carrier 103, and the output member 5 in this order, and is output from the output member 5.

### <High Reduction Ratio Mode>

To switch the two-speed transmission 1 to the high reduction ratio mode, the electric friction engaging device 7 is switched to the disconnected mode, and the rotation transmission state switching device 8 is switched to the lock mode.

In the present example, due to the rotating of the drive cam 34 by the electric actuator 29, each rolling element 36 is positioned at the first flat surface portion 48c of the drive cam surface 48, and the driven cam 35 is displaced in a direction in which the distance in the axial direction from the drive cam 34 is increased (toward the one side in the axial direction). Thereby, by pressing the piston 32 of the elastic biasing member 27 toward the one side in the axial direction through the thrust bearing 57 and the pressing member 58, the elastic member 33 is elastically compressed, and the force of pressing the first friction plates 30 and the second friction plates 31 against each other is lost.

Due to the action of the return spring 70, the distance between the first friction plates 30 and the second friction plates 31 is widened, and the frictional engagement portion 26 is disconnected, thereby switching the electric friction engaging device 7 to the disconnected mode. As a result, the input member 4 and the rotating member 6 come to rotate relative to each other, and the sun gear 101 and the ring gear 102 are able to rotate relative to each other.

At the same time as switching the electric friction engaging device 7 to the disconnected mode, due to adjusting the phase in the circumferential direction of the mode selecting member 73 with respect to the second member 72, as illustrated in FIG. 19B, the protruding portion 97 is located at a portion separated in the circumferential direction from the first engagement pawl 91 and the second engagement pawl 94.

Therefore, the engagement recess portions 74 of the first member 71 are engaged with the first engagement pawls 91 and the second engagement pawls 94, and the rotation transmission state switching device 8 switches to the lock mode in which rotation of the first member 71 with respect to the second member 72 is prevented, regardless of the relative rotation direction between the first member 71 and the second member 72. As a result, rotation of the rotating member 6 with respect to the fixed portion 10 is prevented, and rotation of the sun gear 101 is prevented.

In the high reduction ratio mode, the rotational torque of the input member 4, as illustrated by the bold line in FIG. 2B, is transmitted to the input member 4, the ring gear 102, the rotational motion of the planetary gear 104, the revolving motion of the planetary gear 104 due to the engagement with the sun gear 101, the carrier 103, and the output member 5 in that order, and is output from the output member 5. The reduction ratio between the input member 4 and the output member 5 in the high reduction ratio mode is determined by the gear ratio between the ring gear 102 and the sun gear 101 (number of teeth of the ring gear 102/number of teeth of the sun gear 101).

In the two-speed transmission 1 of the present example, due to one drive cam 34 being rotationally driven by the electric actuator 29, not only the mode of the electric friction engaging device 7 but also the mode of the rotation transmission state switching device 8 may be switched.

Note that in a case of implementing the two-speed transmission according to the present disclosure, the mode switching of the electric friction engaging device and the mode switching of the rotation transmission state switching device may be performed by separate actuators.

The two-speed transmission 1 of the present example further includes a reduction ratio switching mode in order to switch from the high reduction ratio mode to the low reduction ratio mode while preventing the rotational torque of the output member 5 from changing discontinuously.

### <Reduction Ratio Switching Mode>

When the two-speed transmission 1 starts switching from the high reduction ratio mode to the low reduction ratio mode, first, due to adjusting the phase in the circumferential direction of the mode selecting member 73 with respect to the second member 72, the rotation transmission state switching device 8 is switched to the one-way clutch mode that allows the first member 71 to rotate only in the predetermined direction (the predetermined direction in FIG. 19C) relative to the second member 72, and prevents rotation in the opposite direction to the predetermined direction.

At the same time that the rotation transmission state switching device 8 switches to the one-way clutch mode, or after switching to the one-way clutch mode, switching of the electric friction engaging device 7 from the disconnected mode to the connected mode is started. While the electric friction engaging device 7 is switching from the disconnected mode to the connected mode, due to rotation of the drive cam 34, the rolling element 36 moves down the first inclined surface portion 48b of the drive cam surface 48 from the state illustrated in FIG. 14B to the state illustrated in FIG. 14A.

As the amount that each rolling element 36 rides up from the first bottom portion 48a of the drive cam surface 48 gradually decreases, the force that presses the first friction plates 30 and the second friction plates 31 against each other gradually increases (the engagement force F of the frictional engagement portion 26 gradually increases). At this time, the input member 4 rotates while causing the surfaces on both sides in the axial direction of the second friction plates 31 to slide over (come in sliding contact with) the surfaces on both sides in the axial direction of the first friction plates 30.

When the engagement force F of the frictional engagement portion 26 gradually increases while the input member 4 rotates in the forward rotation direction, the torque applied to the second member 72 of the rotation transmission state switching device 8 in the opposite direction to the predetermined direction gradually decreases. At this time, the rotation transmission state switching device 8 is switched to the one-way clutch mode, and thus even in a case where torque is applied to the second member 72 in a direction opposite to the predetermined direction, the second member 72 does not rotate. At the moment when the direction of the torque applied to the second member 72 is reversed (the torque in the predetermined direction is applied to the second member 72) after the torque applied to the second member 72 in the opposite direction to the predetermined direction gradually decreases to 0, the second member 72 is allowed to rotate in the predetermined direction.

### <Neutral Mode>

To switch the two-speed transmission 1 to the neutral mode, the electric friction engaging device 7 is switched to the disconnected mode, and the rotation transmission state switching device 8 is switched to the free mode.

Due to the rotating of the drive cam 34 by the electric actuator 29, the rolling element 36 is positioned at the second flat surface portion 48g of the drive cam surface 48, and the driven cam 35 is displaced in a direction in which the distance in the axial direction from the drive cam 34 is increased (toward the one side in the axial direction). Thereby, by pressing the piston 32 of the elastic biasing member 27 toward the one side in the axial direction through the thrust bearing 57 and the pressing member 58, the elastic member 33 is elastically compressed, and the force of pressing the first friction plates 30 and the second friction plates 31 against each other is lost.

Due to the action of the return spring 70, the distance between the first friction plates 30 and the second friction plates 31 is widened, and the frictional engagement portion 26 is disconnected, thereby switching the electric friction engaging device 7 to the disconnected mode. As a result, the input member 4 and the rotating member 6 come to rotate relative to each other, and the sun gear 101 and the ring gear 102 are able to rotate relative to each other.

At the same time as switching the electric friction engaging device 7 to the disconnected mode, due to adjusting the phase in the circumferential direction of the mode selecting member 73 with respect to the second member 72, the rotation transmission state switching device 8 switches to the free mode in which rotation of the first member 71 with respect to the second member 72 is allowed, regardless of the relative rotation direction between the first member 71 and the second member 72. As a result, rotation of the rotating member 6 with respect to the fixed portion 10 is allowed, and rotation of the sun gear 101 is allowed.

In the neutral mode, the input member 4 and the output member 5 rotate idly with respect to each other, and no torque is transmitted between the input member 4 and the output member 5.

### <Parking Lock Mode>

To switch the two-speed transmission 1 to the parking lock mode, the electric friction engaging device 7 is switched to the connected mode, and the rotation transmission state switching device 8 is switched to the lock mode.

By switching the electric friction engaging device 7 to the connected mode, rotation of the input member 4 with respect to the rotating member 6 is prevented, and rotation of the ring gear 102 with respect to the sun gear 101 is prevented.

At the same time as switching the electric friction engaging device 7 to the connected mode, the rotation transmission state switching device 8 switches to the lock mode in which rotation of the first member 71 with respect to the second member 72 is prevented, regardless of the relative rotation direction between the first member 71 and the second member 72. As a result, rotation of the rotating member 6 with respect to the fixed portion 10 is prevented, and rotation of the sun gear 101 is prevented.

In the parking lock mode, the rotation of the input member 4 and output member 5 is locked.

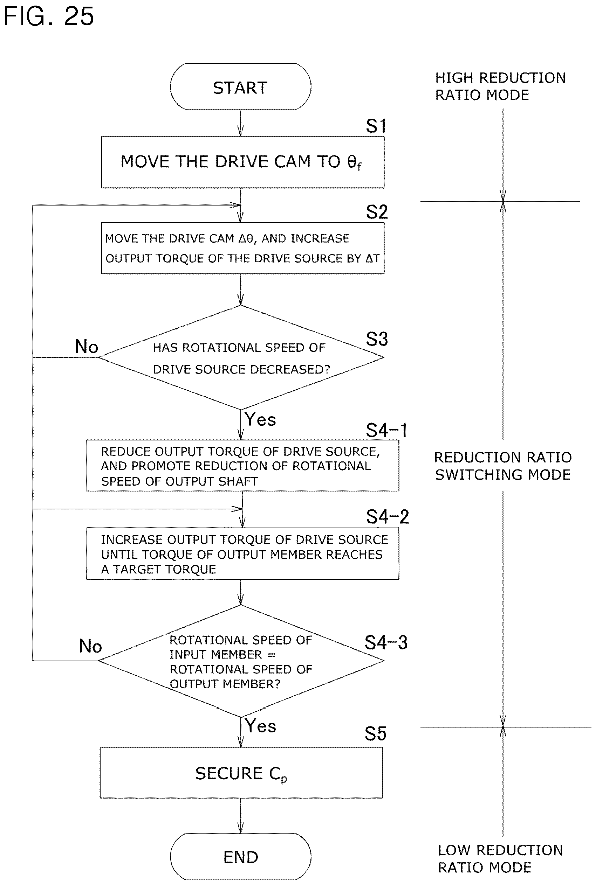

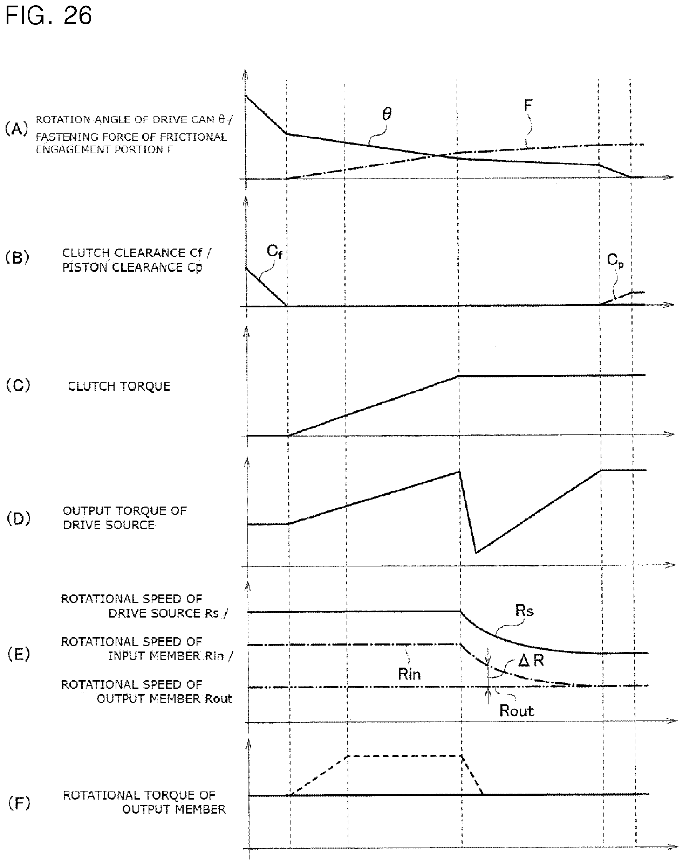

The control of the drive source 2 and the shift motor 66 in order to prevent the occurrence of transmission shock during switching from the high reduction ratio mode to the low reduction ratio mode by preventing the rotational torque of the output member 5 from changing discontinuously (rapidly) will be explained with reference to FIGS. 25 and 26. In the following, an example of a case in which the rotational torque of the output member 5 is kept substantially constant before and after switching from the high reduction ratio mode to the low reduction ratio mode will be described.

When switching from the high reduction ratio mode to the low reduction ratio mode is started due to conditions such as vehicle speed and accelerator opening, first, by rotationally driving the drive cam 34 by the electric actuator 29, the rotation transmission state switching device 8 is switched to the one-way clutch mode, and the phase in the rotational direction of the drive cam 34 is moved to the clutch touch point θ_{f} (S1).

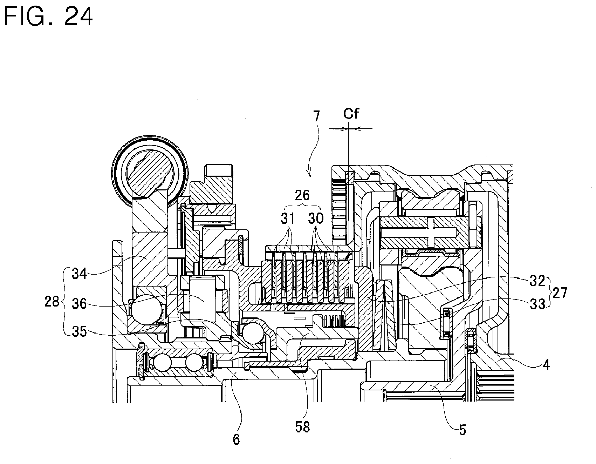

The clutch touch point θ_{f} is a point at which the elastic biasing member 27 begins to generate a force that presses the first friction plate 30 and the second friction plate 31 against each other. In other words, the clutch touch point θ_{f} is a point at which an end portion on the other side in the axial direction of the piston 32 starts to come into contact with the first friction plate 30 or the second friction plate 31 located closest to the one side in the axial direction, that is, a point where the clutch clearance C_{f} (see FIG. 24) becomes 0. In the present example, the clutch touch point θ_{f} is determined in advance by a function described later.

When the phase in the rotational direction of the drive cam 34 is moved to the clutch touch point θ_{f}, a transition is made to the torque phase (S2). In the torque phase, by the electric actuator 29 rotating the drive cam 34 at a predetermined rotational speed (rotational speed) to reduce the amount by which the rolling element 36 rides up from the first bottom portion 48a, the pressing force between the first friction plate 31 and the second friction plate 31, that is, the engagement force F of the friction engagement portion 26 is gradually increased. At the same time, the output torque of the drive source 2 is gradually increased.

That is, in a case where the output torque of the drive source 2 is kept constant, in the torque phase, as the engagement force F of the frictional engagement portion 26 increases, the torque transmitted to the frictional engagement portion 26 increases, and thus the rotational torque of the output member 5 decreases. In the two-speed transmission 1 of the present example, in order to keep the rotational torque of the output member 5 almost constant regardless of an increase in the engagement force F of the frictional engagement portion 26, the output torque of the drive source 2 is gradually increased in accordance with an increase in the engagement force F of the frictional engagement portion 26, that is, the amount of rotation of the drive cam 34.

The relationship between the amount of rotation of the drive cam 34 and the amount of increase in the output torque of the drive source 2 is determined in advance by experiment or calculation. In the present example, the rotational speed of the drive cam 34 in S2 is made smaller than the rotational speed of the drive cam 34 in S1. However, the rotational speed of the drive cam 34 in S2 can be the same as the rotational speed of the drive cam 34 in S1, or can be made larger than the rotational speed of the drive cam 34 in S1.

More specifically, in S2, the drive cam 34 is rotated by a predetermined angle, and at the same time, the output torque of the drive source 2 is increased by an amount corresponding to the amount of rotation of the drive cam 34. In the next step S3, it is determined whether or not the torque phase has ended.

In the torque phase, as the engagement force F of the frictional engagement portion 26 increases, the clutch torque transmitted to the frictional engagement portion 26 increases, and the torque applied to the second member 72 of the rotation transmission state switching device 8 in the opposite direction to the predetermined direction gradually decreases. At the moment when the direction of the torque applied to the second member 72 is reversed (the torque in the predetermined direction is applied to the second member 72) after the torque applied to the second member 72 in the opposite direction to the predetermined direction gradually decreases to 0, the second member 72 is allowed to rotate in the predetermined direction, and the sun gear 101 is allowed to rotate. When the sun gear 101 rotates, the rotational speed Rs of the output shaft 11 of the drive source 2 begins to decrease.

In the two-speed transmission 1 of the present example, in a case where it is determined that the rotational speed Rs of the output shaft 11 has decreased by a predetermined value or more based on an output signal of a rotation sensor attached to the output shaft 11 of the drive source 2, it is determined that the torque phase has ended. This determination is made based on the rotation sensor attached to the output shaft 11 of the drive source 2.

In a case where it is determined that the rotational speed Rs of the output shaft 11 is substantially constant, that is, the amount of decrease in the rotational speed Rs of the output shaft 11 is smaller than a predetermined value, and the torque phase is not completed, the process returns to S2.

In S3, in a case where it is determined that the amount of decrease in the rotational speed Rs of the output shaft 11 is equal to or greater than a predetermined value and the torque phase has ended, the transmission moves to an inertia phase (S4-1 to S4-3).

In the inertia phase, first, the output torque of the drive source 2 is quickly reduced to promote a further reduction in the rotational speed Rs of the output shaft 11 (S4-1). The amount of decrease in the output torque of the drive source 2 is not particularly limited as long as it is possible to promote a further decrease in the rotational speed Rs of the output shaft 11. More specifically, for example, the output torque of the drive source 2 can be reduced to 0 or a negative value.

When the rotational speed Rs of the output shaft 11 begins to decrease, the output torque of the drive source 2 is increased so that the rotational torque of the input member 4 reaches a target torque, which is a rotational torque that the output member 5 should output when the two-speed transmission 1 has completed switching to the low reduction ratio mode. (S4-2). In the present example, the rotational torque of the output member 5 is approximately constant before and after switching from the high reduction ratio mode to the low reduction ratio mode, and thus the output torque of the drive source 2 is increased until the rotational torque of the input member 4 becomes equal to the rotational torque of the output member 5 at the time when switching from the high reduction ratio mode to the low reduction ratio mode starts.

The speed at which the output torque of the drive source 2 is increased is not particularly limited as long as the rotational torque of the input member 4 can be increased to the target torque until the completion of the inertia phase. For example, the output torque of the drive source 2 can be controlled according to the difference (differential rotation) ΔR between the rotational speed Rin of the input member 4 and the rotational speed Rout of the output member 5. More specifically, as the rotational speed Rs of the output shaft 11 decreases, the rotational speed Rin of the input member 4 decreases, and as the differential rotation ΔR becomes smaller, the output torque of the drive source 2 is increased, at the instant when the differential rotation ΔR becomes 0, the rotational torque of the input member 4 can be controlled so as to reach the target torque.

Next, in S4-3, it is determined whether or not the rotational speed Rin of the input member 4 and the rotational speed Rout of the output member 5 are equal. More specifically, it is determined whether or not the difference (differential rotation) ΔR between the rotational speed Rin of the input member 4 and the rotational speed Rout of the output member 5 is within a predetermined range. This determination is performed based on an output signal from a rotation sensor attached to the output shaft 11 or to both the input member 4 and output member 5.

In a case where it is determined that the rotational difference ΔR is not within the predetermined range, that is, the rotational speed Rin of the input member 4 and the rotational speed Rout of the output member 5 are not equal, then after a predetermined time has elapsed, the process in S4-3 is executed again.

In a case where it is determined that the rotational difference ΔR is within the predetermined range, that is, when it is determined that the rotational speed Rin of the input member 4 and the rotational speed Rout of the output member 5 are equal, it is determined that the inertia phase has ended, and the process moves to the next step S5.

In S5, the electric actuator 29 rotates the drive cam 34 to a predetermined phase in the circumferential direction, positions each rolling element 36 at the first bottom portion 48a of the drive cam surface 48, and displaces the driven cam 35 toward the other side in the axial direction, which is the direction in which the distance in the axial direction from the drive cam 34 decreases. Thus, a piston clearance Cₚ between an end portion on the one side in the axial direction of the pressing member 58 and a surface on the other side in the axial direction of the piston 32 is maintained. In other words, the piston clearance Cₚ is set to be greater than or equal to 0, preferably set to be greater than 0.

After each rolling element 36 has been moved to the first bottom portion 48a, the process proceeds to the end. As described above, the two-speed transmission 1 is switched from the high reduction ratio mode to the low reduction ratio mode. After that, by maintaining the phase of the drive cam 34 in the circumferential direction, the two-speed transmission 1 is maintained in the low reduction ratio mode.

In the two-speed transmission 1 of the present example, by controlling the drive source 2 and the shift motor 66. It is possible to prevent the rotational torque of the output member 5 from changing (suddenly) and thereby preventing the occurrence of transmission shock, even when switching between the high reduction ratio mode and the low reduction ratio mode. However, in order to prevent the occurrence of transmission shock, the timing of controlling the output torque and rotational speed Rs of the drive source 2 and the rotational speed (rotation amount) of the shift motor 66 is important.

For example, even though the phase in the rotational direction of the drive cam 34 has not reached the clutch touch point θ_{f}, when the transmission moves to S2 and the output torque of the drive source 2 is increased, the rotational torque of the output member 5 may increase inadvertently, as illustrated by the dashed line in FIG. 26F.

Here, as the amount of wear on the first friction plate 30 and the second friction plate 31 increases with the use of the two-speed transmission 1, the required amount of pressure in order to switch the electric friction engaging device 7 to the connected mode by the elastic biasing member 27 on the first friction plate 30 or the second friction plate 31 closest on the one side in the axial direction toward the other side in the axial direction increases.

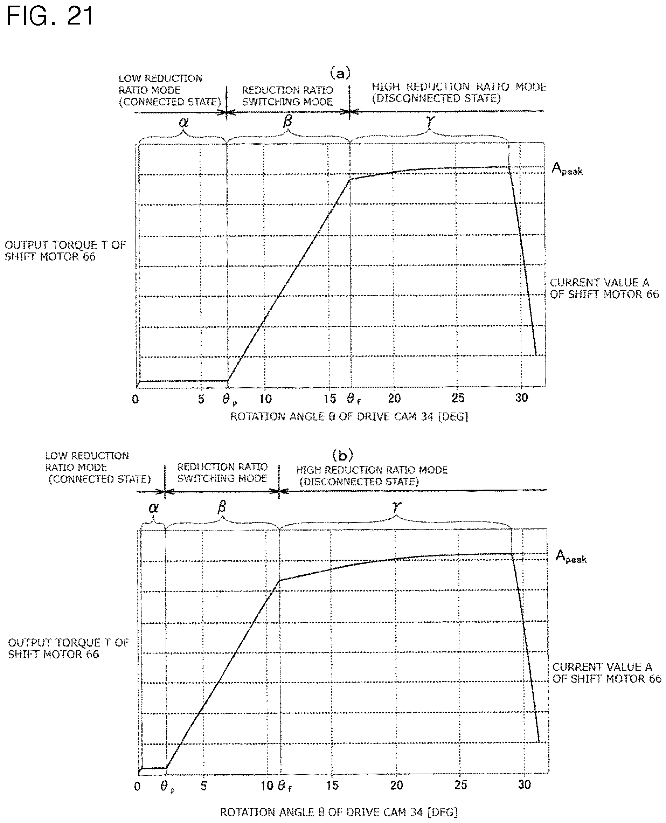

In other words, the amount of pressure required by the cam device 28 toward the one side in the axial direction of the piston 32 when switching the electric friction engaging device 7 to the disconnected mode is reduced. As a result, the relationship between the rotation angle θ of the drive cam 34 and the current value A of the shift motor 66 changes from the state illustrated in FIG. 21A to the state illustrated in FIG. 21B. That is, as the amount of wear of the first friction plate 30 and the second friction plate 31 increases, the clutch touch point θ_{f} becomes smaller.

FIGS. 21A and 21B are diagrams illustrating the relationship between the rotation angle θ of the drive cam 34 and the output torque T and current value A of the shift motor 66 when switching the electric friction engaging device 7 from the connected mode to disconnected mode. FIG. 21A illustrates a case in which the first friction plate 30 and the second friction plate 31 are new and not worn, and FIG. 21B illustrates a case in which the wear of the first friction plate 30 and the second friction plate 31 has progressed significantly.

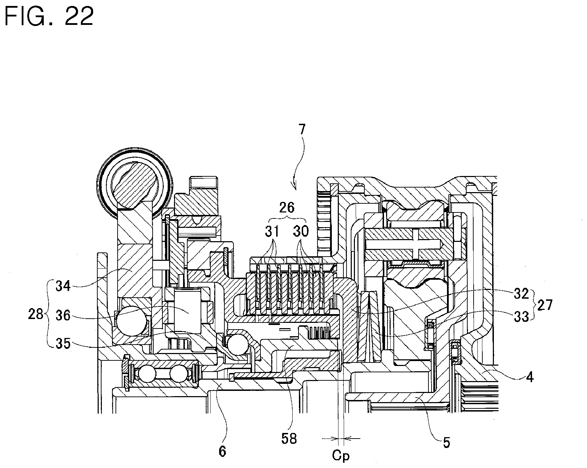

As the amount of wear on the first friction plate 30 and the second friction plate 31 increases, the piston touch point θₚ also decreases. The piston touch point θₚ, in a case of rotating the drive cam 34 in the direction of switching the frictional engagement portion 26 from the connected state to the disconnected state, is a point at which the elastic biasing member 27 begins to be pressed in the direction of releasing the force pressing the first friction plate 30 and the second friction plate 31 against each other. In other words, the piston touch point θₚ, in a case of rotating the drive cam 34 in the direction of switching the frictional engagement portion 26 from the disconnected state to the connected state, is a point at which a piston clearance Cₚ (see FIG. 22) begins to occur between the end portion on the one side in the axial direction of the pressing member 58 and the surface on the other side in the axial direction of the piston 32.

The two-speed transmission 1 of the present example has a function to prevent transmission shock regardless of wear of the first friction plate 30 and the second friction plate 31. More specifically, the two-speed transmission 1 of the present example has a first function of detecting the piston touch point θₚ, a second function of detecting the clutch touch point θ_{f}, and a third function of adjusting the amount of rotation of the drive cam 34 based on the piston touch point θₚ and/or the clutch touch point θ_{f} when switching between the high reduction ratio mode and the low reduction ratio mode.

As can be clearly understood from FIGS. 21A and 21B, when switching the mode of the electric friction engaging device 7, the output torque T of the shift motor 66 and the current value A of the shift motor 66 change with the same tendency. The two-speed transmission 1 of the present example detects the piston touch point θₚ and the clutch touch point θ_{f} based on the current value A of the shift motor 66 when switching the electric friction engaging device 7 from the connected mode to the disconnected mode.

In a state in which the electric friction engagement device 7 is switched to the connected mode, each rolling element 36 of the cam device 28 is located at the first bottom portion 48a of the drive cam surface 48. In this state, as illustrated in FIG. 22, the piston clearance Cₚ exists between the end portion on the one side in the axial direction of the pressing member 58 and the surface on the other side in the axial direction of the piston 32. Due to the existence of this piston clearance Cₚ, displacement of the piston 32 toward the other side in the axial direction is allowed. Therefore, the piston 32 is elastically pressed toward the other side in the axial direction by the elastic restoring force of the elastic member 33, and by the piston 32 pressing the first friction plate 30 or the second friction plate 31 closest on the one side in the axial direction toward the other side in the axial direction, the first friction plates 30 and the second friction plates 31 press against each other.

In order to switch the electric friction engaging device 7 from the connected mode to the disconnected mode, the drive cam 34 is rotated in the predetermined direction due to the shift motor 66 being energized, and the amount by which the rolling elements 36 ride up from the first bottom portion 48a is increased. At this time, the current value A of the shift motor 66 is approximately constant except for the starting current that flows temporarily (range α in FIGS. 21A and 21B).

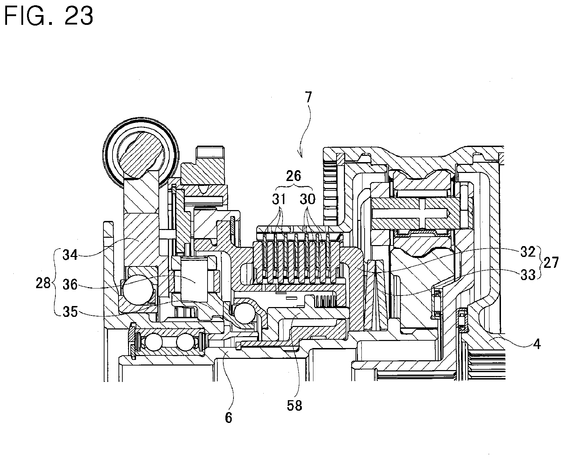

When the pressing member 58 is moved toward the one side in the axial direction by increasing the amount of the rolling elements 36 riding up from the first bottom portion 48a, as illustrated in FIG. 23, the end portion on the one side in the axial direction of the pressing member 58 comes in contact with the surface on the other side in the axial direction of the piston 32. In other words, the piston clearance Cₚ becomes zero.

When the drive cam 34 is further rotated in the predetermined direction by the shift motor 66 from the state illustrated in FIG. 23, the piston 32 is pressed against the elastic restoring force of the elastic member 33 toward the one side in the axial direction by the driven cam 35 through the pressing member 58. In this state, a part of the elastic restoring force of the elastic member 33 is supported by the cam device 28 through the pressing member 58 and the thrust bearing 57, and the remaining part is supported by the fixed portion 10 through the frictional engagement portion 26 and the rotation transmission state switching device 8.

When the piston 32 is pushed toward the one side in the axial direction, the force pressing the first friction plate 30 and the second friction plate 31 against each other gradually decreases mainly due to the elastic restoring force of the second friction plate 31 and the elastic member 33. That is, the engagement force F of the frictional engagement portion 26 gradually decreases.

While the engagement force F of the frictional engagement portion 26 is gradually reduced, the current value A of the shift motor 66 increases at a substantially constant rate of increase (slope) (medium range β in FIGS. 21A and 21B). That is, the rate of increase of the current value A in the range β is greater than the rate of increase of the current value A in the range α.

The two-speed transmission 1 of the present example, by the first function, detects the phase θ (reference position (for example, the initial position where the rolling element 36 is located at the bottom portion of the recess portion)) in the rotational direction of the drive cam 34 when the current value A of the shift motor 66 starts to increase at an increase rate equal to or higher than a predetermined first threshold value, after energizing the shift motor 66 in order to switch the electric friction engaging device 7 from the connected mode to the disconnected mode, as the piston touch point θₚ at which the piston clearance Cₚ becomes 0. The first threshold value can be determined in advance through experiments, simulations, and the like.

The rate of increase in the current value A is the amount of increase ΔA in the current value A per unit rotation angle Δθ of the drive cam 34. In a case where the drive cam 34 is rotated in the predetermined direction at a constant rotational speed, the amount of increase ΔA in the current value A per unit time can also be used for determination.

The engagement force F of the frictional engagement portion 26 gradually decreases, and when the engagement force F reaches 0, from that moment on, as illustrated in FIG. 24, a clutch clearance C_{f} begins to occur between the end portion on the other side in the axial direction of the piston 32 and the first friction plate 30 or the second friction plate 31 located closest on the one side in the axial direction. When the clutch clearance C_{f} begins to occur, almost all of the elastic restoring force of the elastic member 33 is supported by the cam device 28 through the pressing member 58 and the thrust bearing 57.

After the clutch clearance C_{f} begins to occur, the current value A of the shift motor 66 increases slowly and logarithmically (range γ in FIGS. 21A and 21B). That is, the rate of increase in the current value A in the range γ is smaller than the rate of increase in the current value A in the range β.

The two-speed transmission 1 of the present example, by the second function, detects the phase θ in the rotational direction of the drive cam 34 when the rate of increase in the current value A of the shift motor 66 becomes equal to or less than a predetermined second threshold value after the phase in the rotational direction of the drive cam 34 exceeds the piston touch point θₚ, when the electric friction engaging device 7 is switched from the connected mode to the disconnected mode, as the clutch touch point θ_{f} at which the clutch clearance C_{f} becomes 0. Note that the second threshold value is smaller than the first threshold value. The second threshold value can be determined in advance through experiments, simulations, and the like.

Detection of the piston touch point θₚ and the clutch touch point θ_{f} can be performed at any timing as long as there is no problem with driving an automobile equipped with the two-speed transmission 1. More specifically, for example, detection may be carried out at timing when switching the two-speed transmission from the low reduction ratio mode to the high reduction ratio mode, or the like, such as immediately after turning ON the ignition key, during kickdown acceleration, when engine braking is activated.

However, in a case of attempting to perform the above operation while the vehicle is running, there are problems such as the inability to drive the drive cam 34 at an arbitrary rotational speed. Therefore, it is preferable to detect the piston touch point θₚ and the clutch touch point θ_{f} while the vehicle is stopped, such as immediately after turning ON the ignition key.

The two-speed transmission 1 of the present example, when switching between the high reduction ratio mode and the low reduction ratio mode, adjusts the rotation amount of the drive cam 34, which is rotationally driven by the shift motor 66 through the reduction gear 67, based on the piston touch point θₚ detected by the first function and/or the clutch touch point θ_{f} detected by the second function. More specifically, for example, in a case of keeping the rotational torque of the output member 5 almost constant before and after switching from the high reduction ratio mode to the low reduction ratio mode, in S1, the clutch touch point θ_{f} detected by the second function is used as a target value of the phase regarding the rotational direction of the drive cam 34.

In the two-speed transmission 1 of the present example, even in a case where the piston touch point θₚ and the clutch touch point θ_{f} change from their initial positions due to wear of the first friction plate 30 and the second friction plate 31, shift control can be performed based on the corrected piston touch point θₚ and clutch touch point Θε. Therefore, according to the two-speed transmission 1 of the present example, the occurrence of transmission shock can be prevented regardless of the wear of the first friction plate 30 and the second friction plate 31.

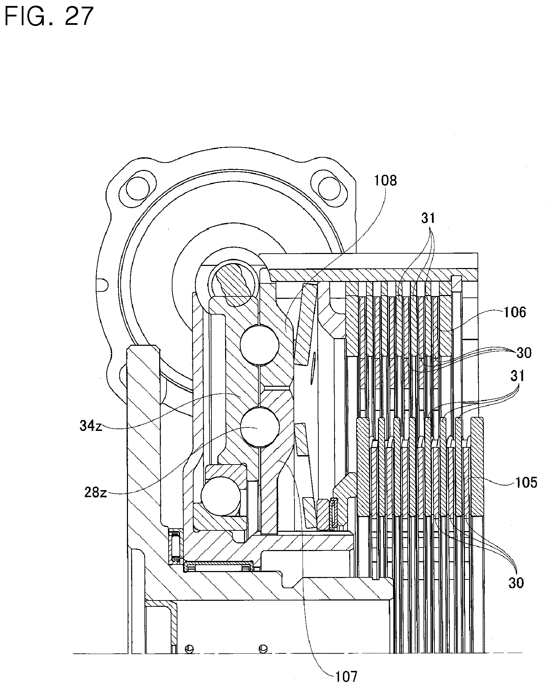

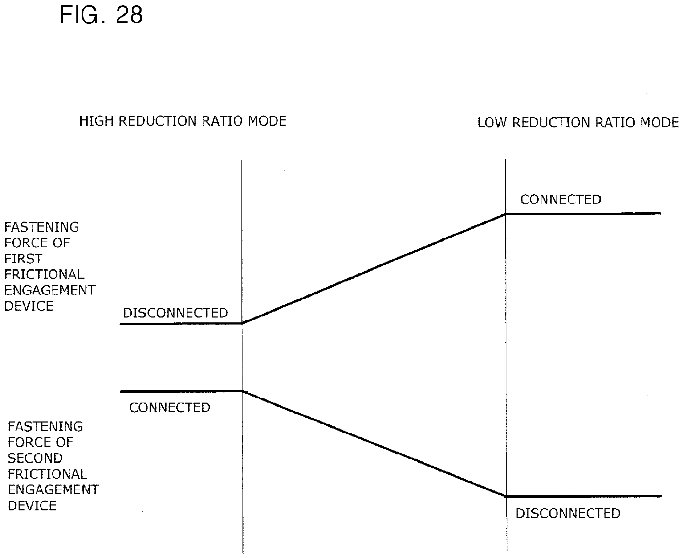

In the two-speed transmission 1 of the present example, the transmission goes through the reduction ratio switching mode during switching from the high reduction ratio mode to the low reduction ratio mode, and thus torque loss is suppressed while suppressing the transmission shock associated with mode switching. The reason for this will be explained with reference to FIGS. 27 and 28.

FIG. 27 illustrates a part of a two-speed transmission of a comparative example. The two-speed transmission of the comparative example includes: a first frictional engagement device 105 that switches whether or not the input member 4 and the rotating member 6 can rotate relative to each other, in other words, the ring gear 102 and the sun gear 101 can rotate relative to each other; and a second frictional engagement device 106 that switches whether or not the rotating member 6 can rotate with respect to the fixed portion 10, in other words, whether or not the sun gear 101 can rotate. That is, the two-speed transmission of the comparative example, instead of employing the rotation transmission state switching device 8 of the two-speed transmission of the present example, employs the second frictional engagement device 106 that switches the mode by pressing or separating the first friction plate 30 and the second friction plate 31.

In the comparative example, the mode of the first frictional engagement device 105 and the mode of the second frictional engagement device 106 are switched by rotating a drive cam 34z of a cam device 28z with an electric actuator and displacing a first driven cam 107 and a second driven cam 108 in the axial direction. The first driven cam 107 and the second driven cam 108 are displaced in mutually different phases (displaced (forward and backward) in mutually opposite directions in the axial direction) as the drive cam 34z rotates.

In the two-speed transmission of the comparative example, during switching from the high reduction ratio mode with a large reduction ratio to the low reduction ratio mode with a small reduction ratio, as illustrated in FIG. 28, the engagement force of the first frictional engagement device 105 gradually increases, and the engagement force of the second frictional engagement device 106 gradually decreases. Therefore, when the engagement force of the second frictional engagement device 106 gradually decreases and becomes insufficient while switching from the high reduction ratio mode to the low reduction ratio mode, the sun gear 101 is dragged by the revolution of the planetary gear 104, and torque loss occurs between the rotating member 6 and the fixed portion 10.

Also, in the two-speed transmission of the comparative example, as the engagement force of the first frictional engagement device 105 gradually increases, the torque applied to the sun gear 101 in the opposite direction to the predetermined direction gradually decreases to zero, and after that, the direction of the torque applied to sun gear 101 is reversed. However, in the two-speed transmission of the comparative example, at the moment when the direction of the torque applied to the sun gear 101 is reversed and the revolution direction of the planetary gear 104 and the rotation direction of the sun gear 101 match, the engagement force of the second frictional engagement device 106 cannot be made sufficiently large. Therefore, the sun gear 101 is dragged with respect to the fixed portion 10, and torque loss occurs between the sun gear 101 and the fixed portion 10.

On the other hand, in the two-speed transmission 1 of the present example, before starting to switch the electric friction engaging device 7 from the disconnected mode to the connected mode in order to switch from the high reduction ratio mode to the low reduction ratio mode based on the rotation of the drive cam 34, the rotation transmission state switching device 8 is set to the one-way clutch mode. Therefore, rotation of the sun gear 101 in the predetermined direction can be allowed, at the moment when the direction of the torque applied to the sun gear 101 is reversed by gradually increasing the engagement force F of the frictional engagement portion 26 in order to switch the electric friction engaging device 7 from the disconnected mode to the connected mode. Therefore, torque loss in the two-speed transmission 1 can be suppressed while suppressing transmission shock caused by mode switching.

In the reduction ratio switching mode, in a state in which the engagement force F of the frictional engagement portion 26 is small enough that no torque loss occurs at the contact portions between surfaces on both sides in the axial direction of the first friction plate 30 and surfaces on both sides in the axial direction of the second friction plate 31, the reduction ratio between the input member 4 and the output member 5 is the same as the reduction ratio in the high reduction ratio mode. On the other hand, in a state in which the engagement force F of the frictional engagement portion 26 is increased to be large enough to be able to transmit torque without causing slippage at the contact portions between the surfaces on both sides in the axial direction of the first friction plate 30 and surfaces on both sides in the axial direction of the second friction plate 31, the reduction ratio between the input member 4 and the output member 5 is the same as the reduction ratio in the low reduction ratio mode, that is, 1.

In a state in which the engagement force F of the frictional engagement portion 26 is such that slippage occurs at the contact portions between the surfaces on both sides in the axial direction of the first friction plate 30 and surfaces on both sides in the axial direction of the second friction plate 31, the reduction ratio between the input member 4 and the output member 5 has a value that depends on the magnitude of the input torque, the rotational speed, and the like.

In a state in which the input member 4 is rotating in the forward rotation direction and the reduction ratio is being switched from the high reduction ratio mode to the reduction ratio switching mode, torque is applied to the second member 72 of the rotation transmission state switching device 8 in a direction opposite to the predetermined direction. Here, in the rotation transmission state switching device 8, rotation of the second member 72 in the direction opposite to the predetermined direction is prevented even during switching from the lock mode to the one-way clutch mode. That is, the reduction ratio between the input member 4 and the output member 5 during switching from the high reduction ratio mode to the reduction ratio switching mode is the same as the reduction ratio in the high reduction ratio mode.

In a case where the input member 4 is rotating in the forward rotation direction and the reduction ratio is being switched from the reduction ratio switching mode to the low reduction ratio mode, torque is applied to the second member 72 of the rotation transmission state switching device 8 in the predetermined direction. Here, in the rotation transmission state switching device 8, rotation of the second member 72 in the predetermined direction is allowed even during switching from the one-way clutch mode to the free mode.

In a case where the input member 4 rotates in the reverse direction, that is, when the vehicle equipped with the two-speed transmission 1 of the present example is traveling in reverse, the vehicle almost never travels at high speed. Therefore, in a case where the input member 4 is rotating in the reverse direction, when switching from the high reduction ratio mode to the low reduction ratio mode, by setting the electric friction engaging device 7 to the one-way clutch mode, as when rotating in the forward rotation direction, there is little need to switch to the reduction ratio switching mode that allows rotation of the sun gear 101 at the moment when the direction of the torque applied to the sun gear 101 is reversed.

Even in a case where the input member 4 rotates in the forward rotation direction, the vehicle is mainly in a deceleration state when switching from the low reduction ratio mode to the high reduction ratio mode. In this case, power is not transmitted from the input member 4 to the output member 5, and thus there is little need to switch the two-speed transmission 1 to the reduction ratio switching mode.

Furthermore, according to the two-speed transmission 1 of the present example, it is possible to maintain good torque transmission efficiency. The reason for this will be explained in the following.

In a state in which the cam device 28 generates a pressing force, that is, in a state in which the driven cam 35 presses the piston 32 toward the one side in the axial direction through the thrust bearing 57 and the pressing member 58 (state illustrated in FIG. 2B), a force directed toward the one side in the axial direction is applied to the thrust bearing 57. In addition, a reaction force caused by the driven cam 35 pressing the piston 32 toward the one side in the axial direction is applied to the radial bearing 38 toward the other side in the axial direction through the rolling element 36 and the drive cam 34.

The bearing ring 59a on the one side in the axial direction of the thrust bearing 57 is supported by the rotating member 6 through the pressing member 58 and the piston 32, and the bearing ring 59b on the other side in the axial direction is supported by the fixed portion 10 through the cam device 28, the angular ball bearing 39, and the cylindrical member 37. Moreover, the inner ring 42 of the radial bearing 38 is externally fitted and fixed to the rotating member 6, and the outer ring 43 is supported by the drive cam 34 of the cam device 28 through the cylindrical member 37 and the angular ball bearing 39.

In the two-speed transmission 1 of the present example, in a state in which the cam device 28 generates a pressing force, or in other words, in a state in which the piston 32 is pressed toward the one side in the axial direction, the dimension in the axial direction of the elastic member 33 is elastically contracted, and the force pressing the first friction plate 30 and the second friction plate 31 against each other is released and the electric friction engaging device 7 is disconnected, the rotation transmission state switching device 8 enters the lock mode. In the high reduction ratio mode in which the electric friction engaging device 7 is disconnected and the rotation transmission state switching device 8 is switched to the lock mode, relative rotation of the rotating member 6 with respect to the fixed portion 10 is prevented.

In this state, the bearing ring 59a on the one side in the axial direction and the bearing ring 59b on the other side in the axial direction of the thrust bearing 57 do not rotate relative to each other, and the inner ring 42 and the outer ring 43 of the radial bearing 38 do not rotate relative to each other. In short, in a state in which a force is applied to the thrust bearing 57 and the radial bearing 38 in the axial direction (left-right direction in FIG. 2B) and rolling resistance is increased, the bearing ring 59a on the one side in the axial direction and the bearing ring 59b on the other side in the axial direction of the thrust bearing 57 do not rotate relative to each other, and the inner ring 42 and outer ring 43 of the radial bearing 38 do not rotate relative to each other. Therefore, the occurrence of torque loss in the thrust bearing 57 and the radial bearing 38 can be prevented.

Note that the pressing force generated by the cam device 28 is applied from the driven cam 35 to the rotating member 6 in a direction toward the one side in the axial direction through the pressing member 58, the thrust bearing 57, the piston 32, and the elastic member 33. On the other hand, the reaction force caused by the pressing force generated by the cam device 28 is applied from the drive cam 34 to the rotating member 6 in a direction toward the other side in the axial direction through the radial bearing 38. In this way, the force in the axial direction caused by the pressing force generated by the cam device 28 is canceled out within the rotating member 6.

On the other hand, in a state in which the rotation transmission state switching device 8 is switched to the free mode and relative rotation of the rotating member 6 with respect to the fixed portion 10 is allowed (the state illustrated in FIG. 2A), the electric friction engaging device 7 is connected, and the cam device 28 is not generating any pressing force. In this state, no force is applied to the thrust bearing 57 and the radial bearing 38 in the axial direction (left and right direction in FIG. 2A) due to the pressing force generated by the cam device 28, and thus the rolling resistance of the thrust bearing 57 and the radial bearing 38 does not become unnecessarily large, and torque loss does not become excessively large.

In the two-speed transmission 1 of the present example, except for a short time during mode switching, in a state in which a force in the axial direction is applied due to generation of a pressing force by the cam device 28 and the rolling resistance becomes large, the thrust bearing 57 and the radial bearing 38 do not rotate. Therefore, the occurrence of excessive torque loss in the thrust bearing 57 and the radial bearing 38 can be prevented, and the transmission efficiency of the torque of the two-speed transmission 1 can be well maintained.

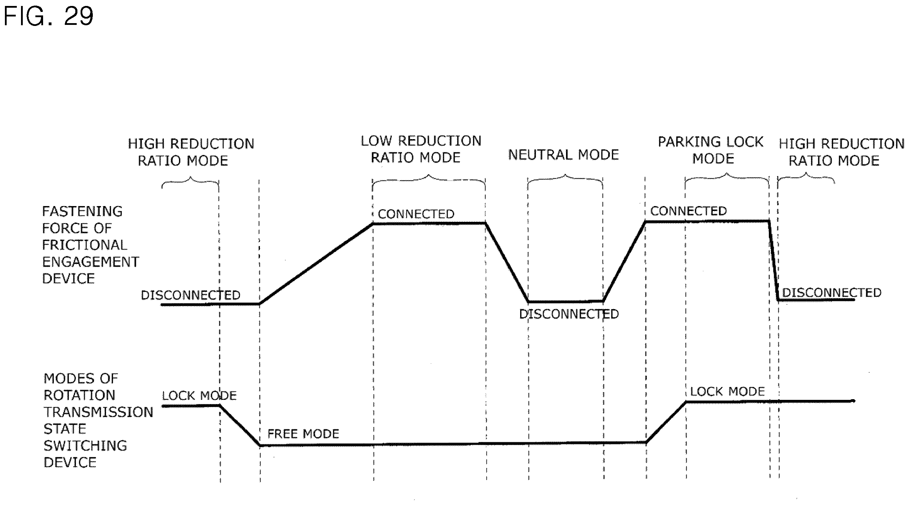

The two-speed transmission according to the present disclosure may also be applied to a structure including a rotation transmission state switching device that does not have a one-way clutch mode, that is, has only a free mode and a lock mode. In such a modification, when switching from the high reduction ratio mode to the low reduction ratio mode, as illustrated in FIG. 29, after switching the rotation transmission state switching device from the lock mode to the free mode, the electric friction engaging device is switched from disconnected mode to connected mode.

### REFERENCE SIGNS LIST

1 Two-speed transmission
2 Drive source
3 Differential device
4 Input member
5 Output member
6 Rotating member
7 Electric friction engaging device
8 Rotation transmission state switching device
9 Planetary reduction mechanism
10 Fixed portion
11 Output shaft
12 Drive gear
13 Input gear
14 Output gear
15 Small-diameter flange portion
16 Flange portion
17 Through hole
18 First circular ring portion
19 First cylindrical portion
20 Second circular ring portion
21 Second cylindrical portion
22 Shaft member
23 Stepped cylindrical member
24 Small-diameter cylindrical portion
25 Female spline portion
26 Frictional engagement portion
27 Elastic biasing member
28, 28z Cam device
29 Electric actuator
30 First friction plate
31 Second friction plate
32 Piston
33 Elastic member
34, 34z Drive cam
35 Driven cam
36 Rolling element
37 Cylindrical member
38 Radial bearing
39 Angular ball bearing
40 Cylindrical portion
41 Outward-facing flange portion
42 Inner ring
43 Outer ring
44 Rolling element
45 Inner ring
46 Outer ring
47 Ball
48 Drive cam surface
48a First bottom portion
48b First inclined surface portion
48c First flat surface portion
48d Second inclined surface portion
48e Second bottom portion
48f Third inclined surface portion
48g Second flat surface portion
48h Fourth inclined surface portion
49 Wheel teeth
50 Pin portion
51 Female spline portion
52 Male spline portion
53 Rectangular hole
54a, 54b Support plate portion
55 Support hole
56 Support recess portion
57 Thrust bearing
58 Pressing member
59a, 59b Bearing ring
60 Rolling element
61 Preload applying means
62 Base portion
63 Partially cylindrical portion
64 Support shaft
65 Roller
66 Shift motor
67 Reduction gear
68 Worm
69a, 69b Support bearing
70 Return spring
71 First member
72 Second member
73 Mode selecting member
74 Engagement recess portion
75 Protruding portion
76 Uneven portion
77 Outer diameter side uneven engaging portion
78 Inner diameter side uneven engaging portion
79 Inner diameter side uneven engaging portion
80 Base portion
81 Cylindrical portion
82 First holding recess portion
83 Second holding recess portion
84a, 84b Spring holding portion
85a, 85b Pedestal portion
86 First pawl member
87 Second pawl member
88 First pawl biasing member
89 Second pawl biasing member
90 First base portion
91 First engagement pawl
92 Annular protruding portion
93 Second base portion
94 Second engagement pawl
95 Base portion
96 Plate-side engagement hole
97 Protruding portion
98 Uneven portion
99 Cover
100 Retaining ring
101 Sun gear
102 Ring gear
103 Carrier
104 Planetary gear
105 First frictional engagement device
106 Second frictional engagement device
107 First driven cam
108 Second driven cam

## Claims

1. A two-speed transmission, comprising:
an input member;
an output member; and
an electric friction engaging device;
the electric friction engaging device including:
a first clutch member;
a second clutch member supported coaxially with the first clutch member and rotatably relative to the first clutch member;
a frictional engagement portion having at least one first friction plate and at least one second friction plate supported displaceabley relative to each other in an axial direction, provided between the first clutch member and the second clutch member, and configured to switch to a connected state in which torque is transmitted between the first clutch member and the second clutch member by pressing the first friction plate and the second friction plate against each other, and switch to a disconnected state in which no torque is transmitted between the first clutch member and the second clutch member by releasing a force pressing the first friction plate and the second friction plate against each other;
an elastic biasing member provided between the first clutch member or the second clutch member and the frictional engagement portion, and elastically biassing the first friction plate and the second friction plate in directions to press against each other;
a cam device having a drive cam and a driven cam supported rotatably and displaceabley in the axial direction relative to the drive cam, and due to the driven cam being relatively displaced in a direction in which a distance in the axial direction from the drive cam increases as the drive cam rotates, pressing the elastic biasing member in a direction that releases the force pressing the first friction plate and the second friction plate against each other; and
an electric actuator having a shift motor and a reduction gear, the shift motor rotationally driving the drive cam through the reduction gear;
the two-speed transmission being configured, based on switching between the connected state and the disconnected state of the frictional engagement portion, to switch between a high reduction ratio mode in which a reduction ratio between the input member and the output member is large, and a low reduction ratio mode in which the reduction ratio between the input member and the output member is small; and
the two-speed transmission including a function of, when the drive cam is rotationally driven by the shift motor through the reduction gear in order to switch the frictional engagement portion from the connected state to the disconnected state, detecting a phase in a rotational direction of the drive cam when an output torque or current value of the shift motor starts increasing at an increase rate equal to or higher than a first threshold value, as a piston touch point at which the elastic biasing member begins to be pressed in a direction that releases the force pressing the first friction plate and the second friction plate against each other, and/or a function of, when the drive cam is rotationally driven by the shift motor through the reduction gear in order to switch the frictional engagement portion from the connected state to the disconnected state, detecting the phase in a rotational direction of the drive cam, after exceeding the piston touch point, when the increase rate becomes equal to or less than a second threshold value, as a clutch touch point at which the force pressing the first friction plate and the second friction plate against each other becomes zero; and
a function of, when switching between the high reduction ratio mode and the low reduction ratio mode, adjusting an amount of rotation of the drive cam rotationally driven by the shift motor through the reduction gear based on the piston touch point and/or the clutch touch point.

2. The two-speed transmission according to claim 1, wherein the electric friction engaging device includes a return spring elastically biassing the first friction plate and the second friction plate in directions separating each other.

3. The two-speed transmission according claim 1 or claim 2, comprising
a drive source configured to rotationally drive the input member; and
including a function of, by controlling output torque and rotational speed of the drive source, and rotational speed of the shift motor, switching from the high reduction ratio mode to the low reduction ratio mode while preventing rotational torque of the output member from changing discontinuously.

4. The two-speed transmission according to any one of claims 1 to 3, comprising
a rotation transmission state switching device including a first member and a second member arranged coaxially with each other, and a mode selecting member that rotates or is displaced in the axial direction as the drive cam rotates, and having a free mode in which rotation of the first member with respect to the second member is allowed regardless of a relative rotational direction between the first member and the second member, and a lock mode in which rotation of the first member with respect to the second member is prevented regardless of the relative rotational direction between the first member and the second member; and
the rotation transmission state switching device switching between the free mode and the lock mode based on rotation or displacement in the axial direction of the mode selecting member.

5. The two-speed transmission according to claim 4, wherein the rotation transmission state switching device includes a one-way clutch mode in which rotation of the first member relative to the second member is allowed only in a predetermined direction, and rotation of the first member relative to the second member in a direction opposite to the predetermined direction is prevented.

6. The two-speed transmission according to claim 5, including a function of setting the rotation transmission state switching device to the one-way clutch mode while the frictional engagement portion is being switched from the disconnected state to the connected state, and/or while the frictional engagement portion is being switched from the connected state to the disconnected state.

7. The two-speed transmission according to any one of claims 4 to 6, comprising
a planetary gear mechanism including a sun gear connected to the input member so as to rotate integrally with the input member, a ring gear arranged around the sun gear and coaxially with the sun gear, a carrier connected to the output member so as to rotate integrally with the output member, and a plurality of planetary gears respectively engaging with the sun gear and the ring gear and supported by the carrier so as to rotate about each central axis; wherein
one of the first friction plate and the second friction plate is supported so as to displace in the axial direction and so as not to rotate relative to the sun gear or the input member;
the other of the first friction plate and the second friction plate is supported so as to displace in the axial direction and so as not to rotate relative to the carrier or the output member;
one of the first member and the second member is supported so as not to rotate relative to a portion that does not rotate during use; and
the other of the first member and the second member is supported so as not to rotate relative to the ring gear.
